# EUROPÄISCHE PATENTSCHRIFT

(11) **EP 4 215 393 B1**
(45) Veröffentlichungstag und Bekanntmachung des Hinweises auf die Patenterteilung: **29.01.2025**
(21) Anmeldenummer: 22198911.4
(22) Anmeldetag: 30.09.2022
(51) Int. Cl.: B60K 6/52, B60K 6/48, B60K 17/344, B60K 6/387, B60K 6/365, B60K 23/08, B60K 6/442

(54) **LEISTUNGSVERZWEIGTER ACHSANTRIEB UND LANDWIRTSCHAFTLICHES FAHRZEUG**
POWER-SPLIT AXLE DRIVE AND AGRICULTURAL VEHICLE
ENTRAÎNEMENT D'ESSIEU À RÉPARTITION DE PUISSANCE ET VÉHICULE AGRICOLE

(30) Priorität: 19.01.2022 DE 102022101166; 19.01.2022 EP 22152192
(43) Veröffentlichungstag der Anmeldung: 26.07.2023
(60) Teilanmeldung: 24219271.4
(73) Patentinhaber: Deere & Company, Moline, IL 61265 (US)
(72) Erfinder: Letscher, Jens, Mannheim (DE); Flemming, Axel, Mannheim (DE); Botev, Decho, Mannheim (DE)
(74) Vertreter: Stein, Stefan

(56) Entgegenhaltungen:
- EP-A1- 3 925 809
- DE-A1- 102014 009 866
- DE-A1- 102017 218 858
- JP-A- 2007 045 177
- US-A1- 2012 077 633

## Beschreibung

Die Erfindung betrifft einen leistungsverzweigten Achsantrieb gemäss dem Oberbegriff des unabhängigen Anspruchs 1 und ein landwirtschaftliches Fahrzeug gemäss dem Oberbegriff des unabhängigen Anspruchs 10.

Die DE 10 2007 021 732 A1 offenbart einen leistungsverzweigten Achsantrieb für Fahrzeuge mit mindestens zwei antreibbaren Fahrzeugachsen, insbesondere für Nutzfahrzeuge und landwirtschaftliche Fahrzeuge. Der leistungsverzweigten Achsantrieb weist ein stufenlos verstellbares Getriebe ohne Zwischenachsdifferenzial mit mindestens einem ersten und einem zweiten Motor auf. Der erste Motor ist dabei mit einer ersten Fahrzeugachse verbunden und der zweite Motor ist mit einer zweiten Fahrzeugachse verbunden. Weiter weist der leistungsverzweigten Achsantrieb eine Kupplung auf. Durch die Kupplung ist eine Verbindung zwischen der ersten und der zweiten Fahrzeugachse herstellbar. Die Drehmomentübertragungsfähigkeit der Kupplung ist in Abhängigkeit von einem Antriebszustand des Fahrzeugs einstellbar. Aus der EP 3 626 502 A1 ist ein landwirtschaftliches Fahrzeug mit einem leistungsverzweigten Achsantrieb bekannt. Der leistungsverzweigte Achsantrieb umfasst einen Teilantriebsstrang mit einem Zusatzantriebselement, einen Elektromotor. Der Elektromotor ist durch eine ansteuerbare Drehmomentübertragungsvorrichtung mit dem leistungsverzweigten Achsantrieb wahlweise trieblich verbindbar. Die DE 10 2013 224 383 A1 offenbart einen leistungsverzweigte Achsantrieb mit einem Leistungsverzweigungsgetriebe und einem Zusatzantriebselement. Sowohl die EP 3 626 502 A1, als auch die DE 10 2013 224 383 A1 offenbaren, dass das Zusatzantriebselement auf das Leistungsverzweigungsgetriebe derart einwirkt, dass dadurch ein Vorlauf einer Fahrzeugachse regelbar ist.

Die bekannten leistungsverzweigten Achsantriebe weisen nachteilhafterweise einen konstruktiv aufwändigen und/oder für landwirtschaftliche Fahrzeuge unzureichenden Aufbau auf. Ebenso ist mit den bekannten leistungsverzweigten Achsantrieben nachteilhafterweise ein effizienter Betrieb und/oder ein effizientes Bremsen nicht realisierbar. Die DE 10 2017 218 858 A1 offenbart ein Fahrzeug mit einem Leistungsverzweigungsgetriebe, bei welchem über eine Zwischenachse ein Drehmoment von einem E-Motor in das Leistungsverzweigungsgetriebe übertragen wird. Die Dokumente DE 10 2014 009 866 A1, US 2012/077633 A, JP 2007 045177 A und EP 3 925 809 A1 offenbaren Leistungsverzweigungskonzepte für einen Vorderachsantrieb.

Der vorliegenden Erfindung liegt daher die Aufgabe zugrunde einen leistungsverzweigten Achsantrieb und ein landwirtschaftliches Fahrzeug sowie ein Verfahren vorzuschlagen, durch welche die vorgenannten Probleme überwunden werden. Insbesondere sollen ein leistungsverzweigter Achsantrieb und ein landwirtschaftliches Fahrzeug sowie ein Verfahren vorgeschlagen werden, die konstruktiv einfacher und/oder weniger aufwändig ausgestaltet sind und/oder einen effizienteren Betrieb ermöglichen und/oder die Leistung und/oder die Fahrtüchtigkeit und/oder Fahreigenschaften des Nutzfahrzeugs bzw. des leistungsverzweigten Achsantriebs verbessert sind.

Diese Aufgabe wird durch einen leistungsverzweigten Achsantrieb mit den Merkmalen des Anspruchs 1 und ein landwirtschaftliches Fahrzeug mit den Merkmalen des Anspruchs 8. Erfindungsgemäß wird ein leistungsverzweigter Achsantrieb, insbesondere Antriebsstrang, für ein landwirtschaftliches Fahrzeug vorgeschlagen, der die Merkmale des Anspruchs 1 aufweist.

Im Folgenden kann unter einem Schaltelement, bevorzugt dem ersten Schaltelement und/oder einem zweiten und/oder dritten und/oder vierten Schaltelement, ein Bauteil verstanden werden, welches je nach Betätigungszustand, eine Relativbewegung zwischen zwei Bauteilen zulassen oder eine feste Verbindung zur Übertragung einer Drehbewegung und/oder einer Kraft und/oder eines Drehmoments bereitstellen kann. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil stillsteht oder in eine entgegengesetzte Richtung rotiert. Bevorzugt handelt es sich bei den Schaltelementen, insbesondere Kupplungen, um reibschlüssige Elemente. Dabei kann über einen Aktuator eine Kraft auf die Verbindungsstelle der beiden Bauteile eingeleitet wird, wodurch eine Reibkraft entsteht, durch welche eine Drehbewegung und/oder oder eine Kraft und/oder ein Drehmoment zwischen den zwei drehbeweglichen Bauteilen übertragbar ist. Im Folgenden kann unter einem nicht betätigten Schaltelement, insbesondere einer nicht betätigten Kupplung, ein geöffnetes Schaltelement, insbesondere eine geöffnete Kupplung, verstanden werden. Dies bedeutet, dass eine Relativbewegung zwischen den beiden Bauteilen möglich ist. Unter einem betätigten Schaltelement, insbesondere einer betätigten Kupplung, kann im Folgenden ein geschlossenes Schaltelement, insbesondere eine geschlossene Kupplung verstanden werden. Dies bedeutet, dass keine Relativbewegung zwischen den beiden Bauteilen möglich ist. Die beiden Bauteile rotieren dementsprechend mit gleicher Drehzahl in dieselbe Richtung. In einer alternativen Ausführungsform können die Schaltelemente, insbesondere Kupplungen, als formschlüssige Elemente ausgeführt sein. Der Aktuator zum Betätigen des Schaltelements, insbesondere der Kupplung, kann hydraulisch, elektromechanisch, elektromagnetisch oder beispielsweise auch pneumatisch betätigbar ausgeführt sein. Der Aktuator, insbesondere ein erster, zweiter, dritter und vierter Aktuator kann das Schaltelement, insbesondere das erste, zweite, dritte und vierte Schaltelement schliessen und öffnen.

Das erste Schaltelement kann bevorzugt eine erste Kupplung sein. Das erste Schaltelement kann betätigbar, bevorzugt selektiv betätigbar, besonders bevorzugt schliessbar und öffenbar und/oder einrückbar und/oder schaltbar und/oder selektiv eingreifbar sein. Mit betätigtem, insbesondere geschlossenem, erstem Schaltelement kann also eine Drehbewegung und/oder eine Kraft und/oder ein Drehmoment vom Leistungsverzweigungsgetriebe an die erste Fahrzeugachse, insbesondere über das erste Differential, und/oder umgekehrt übertragbar sein. Mit nicht betätigtem, also insbesondere geöffnetem, erstem Schaltelement, kann also keine Drehbewegung und/oder keine Kraft und/oder kein Drehmoment vom Leistungsverzweigungsgetriebe an die erste Fahrzeugachse, insbesondere über das erste Differential, und/oder umgekehrt übertragbar sein.

Die erste Bremse kann insbesondere zwischen dem ersten Schaltelement und dem Leistungsverzweigungsgetriebe angeordnet sein. Die erste Bremse ist auf der zweiten Welle angeordnet. Unter einer Bremse, insbesondere der ersten und einer zweiten und dritten Bremse, kann ein reibschlüssiges Bauteil verstanden werden, welches auf der einen Seiten mit einem feststehenden Element, beispielsweise einem Gehäuse oder einem Fahrzeugrahmen, und auf einer anderen Seite mit einem rotierbaren Element, beispielsweise einer Welle, verbunden ist. Dabei wird in der Regel über einen Aktuator eine Kraft auf die Verbindungsstelle eingeleitet, wodurch eine Reibkraft entsteht, durch welche beispielsweise eine Drehbewegung des drehbaren Bauteils der Bremse, und somit insbesondere eine Drehbewegung des rotierbaren Elements, gegen das feststehende Bauteil der Bremse, und somit insbesondere gegen das feststehende Element, abgestützt und somit die Drehbewegung gehemmt beziehungsweise verhindert oder gehalten wird. Im Speziellen kann das rotierende Bauteil der ersten Bremse mit der zweiten Welle verbunden, insbesondere drehfest verbunden sein, und das feststehende Bauteil der ersten Bremse mit einem Getriebegehäuse oder Gehäuse oder einem Fahrzeugrahmen verbunden sein. Dadurch kann, wenn die erste Bremse geschlossen ist, die zweite Welle in Bezug auf eine Drehbewegung gehalten und/oder gehemmt sein. Im Folgenden ist unter einer nicht betätigten Bremse eine geöffnete Bremse zu verstehen. Dies bedeutet, dass sich das rotierbare Element, und/oder insbesondere das rotierbare Bauteil der Bremse, im Freilauf befindet, das heißt, dass die Bremse bevorzugt keinen Einfluss auf die Drehzahl des rotierbaren Bauteils nimmt. Bei betätigter beziehungsweise geschlossener Bremse erfolgt eine Reduzierung der Drehzahl des rotierbaren Bauteils. Je nach Anwendung kann die Reduzierung der Drehzahl des rotierbaren Bauteils bis hin zum Stillstand erfolgen. Dies bedeutet dann, dass eine feste Verbindung zwischen dem rotierbaren Bauteil, insbesondere und dem feststehenden Bauteil herstellbar ist. Dadurch kann, wenn die erste Bremse geöffnet ist, die zweite Welle in Bezug auf eine Drehbewegung drehbar sein. Alternativ dazu sind auch Ausführungen denkbar, bei denen die Bremse im betätigten Zustand geöffnet und im nicht betätigten Zustand geschlossen ist. In weiteren alternativen Ausführungsformen ist auch eine formschlüssige Bremse denkbar. Bei formschlüssigen Verbindungen erfolgt eine, beispielsweise drehfeste, Verbindung zweier Bauteile aufgrund des Eingriffs der Konturen der zu verbindenden Bauteile. Formschlüssige Verbindungen weisen insbesondere den Vorteil auf, dass sie bei vergleichsweise geringen Abmessungen und Gewicht hohe Kräfte und Momente übertragen können. Darüber hinaus ist die aufzubringende Energie für die Verbindungsherstellung wesentlich geringer, als bei reibschlüssigen Verbindungen, wodurch beispielsweise der Aktuator kleiner ausgelegt werden kann. Der Aktuator zum Betätigen der Bremse kann hydraulisch, elektromechanisch, elektromagnetisch oder beispielsweise auch pneumatisch betätigbar ausgeführt sein. Der Aktuator zur Betätigung der Bremse kann dabei wie der Aktuator zur Betätigung des Schaltelements ausgeführt sein. Mit anderen Worten, die erste Bremse kann also auf einer Seite mit der zweiten Welle verbunden sein und auf einer anderen Seite in Bezug auf eine Drehbewegung gehalten oder gehemmt sein, beispielsweise mit dem Getriebegehäuse oder Rahmen verbunden sein. Dies ist beispielsweise dann von Vorteil, wenn ein Fahrzustand gewünscht ist, bei dem eine Drehbewegung und/oder eine Kraft und/oder ein Drehmoment vom ersten Zusatzantriebselement, insbesondere nur, an die zweite Fahrzeugachse, oder von der ersten und/oder zweiten Fahrzeugachse an die erste Bremse, insbesondere also keine Drehbewegung und/oder keine Kraft und/oder kein Drehmoment an die erste und zweite Fahrzeugachse übertragen werden soll. Mit der ersten Bremse und/oder dem ersten Schaltelement können mit dem leistungsverzweigten Achsantrieb und somit insbesondere auch mit dem landwirtschaftlichen Fahrzeug, weitere Betriebsmodi realisiert werden.

Ein Betriebsmodus kann ein "Voll-Elektrisch" Betriebsmodus sein. Dabei kann das erste Zusatzantriebselement mit dem Leistungsverzweigungsgetriebe antreibbar verbunden sein und das erste Schaltelement und die erste Bremse können derart betätigt sein, dass die zweite Fahrzeugachse nur über das erste Zusatzantriebselement antreibbar ist oder angetrieben wird. Im "Voll-Elektrisch" Betriebsmodus kann das erste Zusatzantriebselement insbesondere über ein zweites oder mit einem zweiten Schaltelement mit dem Leistungsverzweigungsgetriebe verbunden sein. Das zweite Schaltelement kann dazu betätigt, insbesondere geschlossen sein. Ausserdem kann im "Voll-Elektrisch" Betriebsmodus das erste Schaltelement nicht betätigt sein, also insbesondere geöffnet sein, und die erste Bremse betätigt sein, also insbesondere geschlossen sein. Dadurch kann ein Leistungsfluss vom ersten Zusatzantriebselement an die zweite Fahrzeugachse realisiert werden, also insbesondere eine Drehbewegung und/oder eine Kraft und/oder ein Drehmoment vom ersten Zusatzantriebselement über das Leistungsverzweigungsgetriebe an die zweite Welle und weiter an die zweite Fahrzeugachse übertragen werden. An oder von der geschlossenen ersten Bremse kann die Drehbewegung und/oder die Kraft und/oder das Drehmoment, welche vom Leistungsverzweigungsgetriebe an die der ersten Fahrzeugachse übertragen werden, an der zweiten Welle gehalten und/oder gehemmt und/oder abgestützt werden. Im "Voll-Elektrisch" Betriebsmodus kann der Antrieb der zweiten Fahrzeugachse durch das erste Zusatzantriebselement unabhängig vom Betriebszustand des Hauptantriebselements erfolgen. Insbesondere kann das Hauptantriebselement abgeschaltet oder vom Hauptgetriebe entkoppelt oder das Hauptgetriebe im Neutralgang sein. Der Betriebsmodus "Voll-Elektrisch" kann mittels der Ein- und Ausgabeeinheit auswählbar sein. Vorteilhafterweise kann somit ein rein elektrischer Betrieb des leistungsverzweigten Achsantriebs, insbesondere auch des Fahrzeugs, erreicht werden. Weiter ist von Vorteil, dass mit dem "Voll-Elektrisch" Betriebsmodus beispielsweise das ein elektrisch betriebener Kriechgang und/oder das Rangieren des landwirtschaftlichen Fahrzeugs, insbesondere auf einer Hofstätte, realisiert werden kann. Im Speziellen kann das landwirtschaftliche Fahrzeug im "Voll-Elektrisch" Betriebsmodus vorteilhafterweise fernbedient werden, beispielsweise, um das Fahrzeug an ein Arbeitsgerät zu koppeln.

Ein weiterer Betriebsmodus kann ein "Parkbremse" Betriebsmodus sein. Dabei kann das erste Zusatzantriebselement nicht mit dem Leistungsverzweigungsgetriebe verbunden sein und/oder das erste Schaltelement und die erste Bremse können derart betätigt sein, dass der leistungsverzweigte Achsantrieb als eine Parkbremse realisierbar ist, insbesondere also das Fahrzeug in Position gehalten wird. Im "Parkbremse" Betriebsmodus kann ausserdem eine zweite Bremse betätigt, insbesondere geschlossen sein, sodass keine Drehbewegung und/oder Kraft und/oder kein Drehmoment an das erste Zusatzantriebselement übertragen werden kann. Im "Parkbremse" Betriebsmodus können das erste Schaltelement und die erste Bremse betätigt, bevorzugt geschlossen sein. Dadurch kann ein Leistungsfluss, also eine Drehbewegung und/oder eine Kraft und/oder ein Drehmoment, von der ersten und/oder zweiten Fahrzeugachse an den leistungsverzweigten Achsantrieb übertragen und abgestützt werden. Dadurch wird das Fahrzeug in seiner Position gehalten. Insbesondere können eine Drehbewegung und/oder Kraft und/oder ein Drehmoment von der ersten Fahrzeugachse auf die zweite Welle an die erste Bremse übertragen werden. Insbesondere können auch eine Drehbewegung und/oder eine Kraft und/oder ein Drehmoment von der zweiten Fahrzeugachse, insbesondere über einen ersten Radsatz, an das Leistungsverzweigungsgetriebe weiter an die zweite Bremse und/oder über die zweite Welle an die erste Bremse übertragen werden. Dabei kann die zweite Welle mit der ersten Bremse, und/oder insbesondere eine Vorgelegewelle mit der zweiten Bremse, in Bezug auf eine Übertragung der Drehbewegung und/oder der Kraft und/oder des Drehmoments gehemmt, insbesondere gehalten und/oder abgestützt werden. Im "Parkbremse" Betriebsmodus kann das Hauptantriebselement abgeschaltet oder vom Hauptgetriebe entkoppelt oder das Hauptgetriebe im Neutralgang sein. Das Fahrzeug kann also insbesondere stillstehen. Der Betriebsmodus "Parkbremse" kann mittels der Ein- und Ausgabeeinheit auswählbar sein. Vorteilhafterweise kann somit ein Betrieb des leistungsverzweigten Achsantriebs als Parkbremse erreicht werden.

Ein weiterer Betriebsmodus kann ein "Fahrzeugachsen-Bremse" Betriebsmodus sein. Dabei kann das erste Zusatzantriebselement nicht mit dem Leistungsverzweigungsgetriebe verbunden sein und/oder das erste Schaltelement und die erste Bremse können derart betätigt sein, dass der leistungsverzweigte Achsantrieb als eine Fahrzeugachsen-Bremse realisierbar ist, insbesondere also das Fahrzeug gebremst wird. Im "Fahrzeugachsen-Bremse" Betriebsmodus kann ausserdem eine zweite Bremse betätigt, insbesondere geschlossen sein, sodass keine Drehbewegung und/oder Kraft und/oder kein Drehmoment an das erste Zusatzantriebselement übertragen werden kann. Im "Fahrzeugachsen-Bremse" Betriebsmodus können das erste Schaltelement und die erste Bremse betätigt, bevorzugt geschlossen sein. Dadurch kann ein Leistungsfluss, also eine Drehbewegung und/oder eine Kraft und/oder ein Drehmoment, von der ersten Fahrzeugachse zumindest teilweise an die erste Bremse und/oder von der ersten Fahrzeugachse über das Leistungsverzweigungsgetriebe zumindest teilweise, insbesondere über den ersten Radsatz und die dritte Welle, weiter an eine Hinterachsbremse, und/oder insbesondere von der ersten Fahrzeugachse zumindest teilweise über das Leistungsverzweigungsgetriebe an die zweite Bremse übertragen werden. Dadurch kann das Fahrzeug gebremst werden. Im Speziellen können mindestens 10%, bevorzugt mindestens 20%, besonders bevorzugt mindestens 25% des Leistungsflusses der ersten Fahrzeugachse an die erste Bremse übertragen werden. Dabei kann die zweite Welle mit der ersten Bremse, und/oder insbesondere eine Vorgelegewelle mit der zweiten Bremse, in Bezug auf eine Übertragung der Drehbewegung und/oder der Kraft und/oder des Drehmoments gehemmt, insbesondere gehalten und/oder abgestützt werden. Im "Fahrzeugachsen-Bremse" Betriebsmodus kann das Hauptantriebselement angeschaltet, also in Betrieb sein, sich insbesondere also das Fahrzeug bewegen. Vorteilhafterweise kann somit ein Betrieb des leistungsverzweigten Achsantriebs als Bremse erreicht werden.

Der leistungsverzweigte Achsantrieb kann ein erstes Differential, insbesondere ein Vorderachsdifferential, umfassen. Das erste Differential kann über die zweite oder mit der zweiten Welle mit dem Leistungsverzweigungsgetriebe verbunden sein, insbesondere antreibbar verbunden sein. Dadurch kann eine Drehbewegung und/oder eine Kraft und/oder ein Drehmoment des Leistungsverzweigungsgetriebes mit dem ersten oder über das erste Differential in oder an die erste Fahrzeugachse und/oder umgekehrt einleitbar oder übertragbar sein. Der leistungsverzweigte Achsantrieb kann auch ein zweites Differential, insbesondere ein Hinterachsdifferential, umfassen. Das zweite Differential kann über die dritte oder mit der dritten Welle mit dem Hauptgetriebe verbunden sein, insbesondere antreibbar verbunden sein. Dadurch kann eine Drehbewegung und/oder eine Kraft und/oder ein Drehmoment des Hauptgetriebes mit oder über das zweite Differential in oder an die zweite Fahrzeugachse und/oder umgekehrt einleitbar oder übertragbar sein.

Bei dem Hauptantriebselement handelt es sich in bevorzugter Weise um eine Verbrennungskraftmaschine, beispielsweise einen mit Gas, Benzin oder Dieselkraftstoff betriebenen Motor. Alternativ kann das Hauptantriebselement jedoch auch in Form einer elektrischen Maschine realisiert werden. Bei dem ersten Zusatzantriebselement handelt es sich bevorzugt um eine elektrische Maschine, beispielsweise einen Elektromotor. Darüber hinaus ist auch eine Ausführung in Form eines hydraulischen Antriebs, beispielsweise einem hydrostatischen Antriebselement, denkbar. Das erste Zusatzantriebselement kann zwei Drehrichtungen (erste Richtung, zweite Richtung) aufweisen. Die zwei Drehrichtung des ersten Zusatzantriebselements können genutzt werden, um somit einen größeren Regelbereich des Vorlaufs der ersten Fahrzeugachse zu erzielen.

Bei der ersten Fahrzeugachse und der zweiten Fahrzeugachse handelt es sich um Fahrzeugachsen, welche antreibbar ausgeführt sein können. Darüber hinaus können die erste Fahrzeugachse und/oder die zweite Fahrzeugachse lenkbar ausgeführt sein, bevorzugt nur die erste Fahrzeugachse. Im Speziellen kann die erste Fahrzeugachse eine Vorderachse und/oder die zweite Fahrzeugachse eine Hinterachse sein.

Das Hauptgetriebe zeichnet sich bevorzugt dadurch aus, dass eine Übersetzung der Drehzahl und/oder der Kraft und/oder des Drehmoments von einem Getriebeeingang zu einem Getriebeausgang stattfindet. Dabei ist der Getriebeeingang an einer Seite des Hauptgetriebes angeordnet, welche bevorzugt dem Hauptantriebselement zugewandt ist. Der Getriebeausgang befindet sich bevorzugt auf einer dem Getriebeeingang gegenüberliegenden Seite des Hauptgetriebes. Das Hauptgetriebe kann beispielsweise als Stufenautomatgetriebe, als stufenloses Getriebe (CVT), als Handschaltgetriebe oder auch als Doppelkupplungsgetriebe ausgeführt sein. Das Hauptgetriebe kann beispielsweise als Stufenautomatgetriebe oder als stufenloses Getriebe, insbesondere als CVT (engl. Continuously Variable Transmission) oder als eIVT (engl. Electrical Infinitely Variable Transmission) oder als hIVT (engl. Hydraulical Infinitely Variable Transmission), oder als Handschaltgetriebe oder auch als Doppelkupplungsgetriebe ausgeführt sein.

Unter einer Welle kann nachfolgend nicht ausschließlich ein beispielsweise zylindrisches, drehbar gelagertes Maschinenelement zur Übertragung von Drehmomenten verstanden werden, sondern vielmehr sind hierunter auch allgemeine Verbindungselemente zu verstehen, die einzelne Bauteile oder Elemente miteinander verbinden. Im Speziellen sind die jeweiligen Bauteile durch die erste, zweite und dritte Welle sowie die Vorgelegewelle mechanisch miteinander verbunden. Dies bedeutet, dass Drehbewegungen und/oder Kräfte und/oder Drehmomente durch die erste, zweite und dritte Welle und die Vorgelegewelle übertragbar sind.

Dem leistungsverzweigten Achsantrieb kann eine Steuerungsvorrichtung zugeordnet sein oder der leistungsverzweigte Achsantrieb kann die Steuerungsvorrichtung umfassen. Die Steuerungsvorrichtung kann mit dem leistungsverzweigten Achsantrieb, insbesondere den Bauteilen des leistungsverzweigten Achsantriebs verbunden sein, bevorzugt signalverbunden und/oder signalübertragend und/oder datenleitend verbunden sein. Die Steuerungsvorrichtung kann zur Steuerung und/oder Regelung und/oder Ansteuerung der miteinander verbundenen Bauteile dienen. Die Steuerungsvorrichtung kann zur Steuerung und/oder Regelung und/oder Ansteuerung des "Voll-Elektrisch" und/oder des "Parkbremse" und/oder des "Fahrzeugachsen-Bremse" Betriebsmodus dienen.

Das erste Zusatzantriebselement kann sowohl generatorisch, als auch motorisch betreibbar sein. Im generatorischen Betrieb wirkt das erste Zusatzantriebselement bremsend, das heißt, dass eine mechanische Energie aus einer Drehbewegung und/oder eine Kraft und/oder ein Drehmoment beispielsweise in eine elektrische Energie umgewandelt wird. Im Gegensatz dazu kann im motorischen Betrieb des ersten Zusatzantriebselements Energie, insbesondere elektrische Energie, in das erste Zusatzantriebselement eingespeist werden, wodurch das Zusatzantriebselement eine Drehbewegung und/oder eine Kraft und/oder ein Drehmoment erzeugt und das erste Zusatzantriebselement treibend oder antreibend wirkt. Das erste Zusatzantriebselement kann bevorzugt motorisch betrieben werden.

Der leistungsverzweigte Achsantrieb kann auch ein Speicherelement umfassen. Das Speicherelement zeichnet sich insbesondere dadurch aus, dass es Energie aufnehmen, Energie speichern und Energie abgeben kann. Bevorzugt handelt es sich bei dem Speicherelement um eine Batterie, einen Akkumulator oder einen Kondensator zur Speicherung von elektrischer Energie. In weiteren Ausführungen sind jedoch auch Druckspeicher zum Speichern von komprimierten Gasen oder Fluiden oder kinetische Energiespeicher denkbar. Bei einem kinetischen Energiespeicher wird kinetische Energie beispielsweise in rotierenden Massen gespeichert. Das erste Zusatzantriebselement kann über eine Verbindungsleitung mit dem Speicherelement leistungselektronisch verbunden sein. Unter einer leistungselektronischen Verbindung kann verstanden werden, dass erzeugte elektrische Energie beziehungsweise gespeicherte elektrische Energie dem Speicherelement zugeführt oder entnommen oder den Verbrauchern, beispielsweise dem ersten Zusatzantriebselement durch die Verbindungsleitung zugeführt werden kann. Das Speicherelement ist dabei optional vorgesehen. Es dient zur Speicherung von Energie, beispielsweise elektrischer Energie, welche im aktuellen Betriebszustand erzeugt wird, jedoch keine Verwendung findet. In Betriebszuständen mit einem hohen Energiebedarf kann dann die gespeicherte Energie bereitgestellt werden. Es sind jedoch auch Ausführungen von leistungsverzweigten Achsantrieben denkbar, bei denen nur dann Energie entnommen oder erzeugt wird, wenn diese, beispielsweise für den direkten Betrieb des ersten Zusatzantriebselements benötigt wird. Die vom Speicherelement bereitgestellt elektrische Energie kann vom ersten Zusatzantriebselement verwendet werden, um das erste Zusatzantriebselement motorisch zu betreiben, um den Vorlauf der ersten Fahrzeugachse zu erhöhen.

In einem Fahrbetrieb oder Schubbetrieb des Fahrzeugs und/oder des leistungsverzweigten Achsantriebs kann das Hauptantriebselement eine Drehbewegung und/oder eine Kraft und/oder ein Drehmoment über die erste oder mit der ersten Welle in das Hauptgetriebe eingeleitet werden. Die in das Hauptgetriebe eingeleitete Drehbewegung und/oder eine Kraft und/oder ein Drehmoment erfährt in dem Hauptgetriebe eine Übersetzung, soweit eine Gangstufe beziehungsweise eine Fahrstufe eingelegt ist. Die bei eingelegter Gangstufe beziehungsweise Fahrstufe vorliegende Drehbewegung und/oder die vorliegende Kraft und/oder das vorliegende Drehmoment kann am Getriebeausgang des Hauptgetriebes, insbesondere über die dritte Welle, in die zweite Fahrzeugachse eingeleitet werden. Darüber hinaus kann die Drehbewegung und/oder die Kraft und/oder das Drehmoment des Hauptantriebselements über das Hauptgetriebe, insbesondere über die dritte Welle in das Leistungsverzweigungsgetriebe eingeleitet oder übertragen werden.

Soweit an dem ersten Zusatzantriebselement keine Drehbewegung und/oder keine Kraft und/oder kein Drehmoment erzeugt wird, können sich die Achsdrehzahlen der ersten Fahrzeugachse und der zweiten Fahrzeugachse wie bei einem Allradsystem mit geöffnetem Längsdifferenzial beziehungsweise mit geöffneter Allradkupplung oder einem rein an einer Achse (hier die zweite Fahrzeugachse) angetriebenem Fahrzeug einstellen. Das erste Zusatzantriebselement befindet sich in diesem Zustand dann in einem Freilauf.

Wesentlich für die Erfindung ist, dass mit dem leistungsverzweigten Achsantrieb, insbesondere auch dem landwirtschaftlichen Fahrzeug, einer oder mehrere der oben genannten Betriebsmodi realisiert werden können. Im Speziellen kann die Steuerungsvorrichtung zur Regelung und/oder Steuerung und/oder Ansteuerung eines oder mehrerer Betriebsmodi des leistungsverzweigten Achsantriebs oder landwirtschaftlichen Fahrzeugs ausgestaltet oder eingerichtet sein. Somit weist der leistungsverzweigte Achsantrieb vorteilhafterweise einen einfacheren Aufbau auf. Darüber hinaus kann von Vorteil ein effizienterer Betrieb des leistungsverzweigten Achsantriebs und des landwirtschaftlichen Fahrzeugs und/oder eine Verteilung der Bremsleistung zwischen den Fahrzeugachsen und/oder der Hinterachsbremse realisiert werden. Die Erfindung ermöglicht somit, dass der leistungsverzweigte Achsantrieb Funktionen wie beispielsweise die Vorderradbremsen und Parksperre übernehmen kann. Diese Elemente können dann eingespart werden und so die Herstellkosten senken.

Gemäß der Erfindung ist das Leistungsverzweigungsgetriebe über einen ersten Radsatz mit dem Hauptgetriebe und der zweiten Fahrzeugachse verbunden, insbesondere antreibbar verbunden. Dadurch kann eine Drehbewegung und/oder eine Kraft und/oder ein Drehmoment vom Hauptantriebselement an das Hauptgetriebe und vom Hauptgetriebe mit dem oder über den ersten Radsatz an oder in das Leistungsverzweigungsgetriebe und/oder umgekehrt übertragen oder eingeleitet werden. Ebenso kann eine Drehbewegung und/oder eine Kraft und/oder ein Drehmoment von der zweiten Fahrzeugachse mit dem oder über den ersten Radsatz an oder in das Leistungsverzweigungsgetriebe und/oder umgekehrt übertragen oder eingeleitet werden. Die bei eingelegter Gangstufe beziehungsweise Fahrstufe vorliegende Drehbewegung und/oder die vorliegende Kraft und/oder das vorliegende Drehmoment am Getriebeausgang des Hauptgetriebes kann über die dritte Welle in die zweite Fahrzeugachse eingeleitet werden. Darüber hinaus kann die Drehbewegung und/oder die Kraft und/oder das Drehmoment des Hauptantriebselements über das Hauptgetriebe von der dritten Welle über den ersten Radsatz in das Leistungsverzweigungsgetriebe eingeleitet oder übertragen werden. Erfindungsgemäß ist das Leistungsverzweigungsgetriebe über den ersten Radsatz mit der dritten Welle verbunden, insbesondere antreibbar verbunden sein. Also kann eine Drehbewegung und/oder eine Kraft und/oder ein Drehmoment vom Hauptantriebselement an das Hauptgetriebe und vom Hauptgetriebe an die dritte Welle und mit dem oder über den ersten Radsatz von der dritten Welle an oder in das Leistungsverzweigungsgetriebe übertragen oder eingeleitet werden. Ebenso kann eine Drehbewegung und/oder eine Kraft und/oder ein Drehmoment von der zweiten Fahrzeugachse an die dritte Welle und mit dem oder über den ersten Radsatz von der dritten Welle an oder in das Leistungsverzweigungsgetriebe übertragen oder eingeleitet werden. Der erste Radsatz umfasst erfindungsgemäß ein erstes und ein zweites Festrad. Das erste Festrad ist mit der dritten Welle und das zweite Festrad mit dem Leistungsverzweigungsgetriebe verbunden. Das erste Festrad kann mit dem zweiten Festrad kämmen, sich also insbesondere in ständigem Kämmeingriff mit diesem befinden. Dadurch kann eine Drehbewegung und/oder eine Kraft und/oder ein Drehmoment zwischen der dritten Welle und dem Leistungsverzweigungsgetriebe mit dem oder über das erste und zweite Festrad und/oder umgekehrt übertragen oder eingeleitet werden.

Gemäß der Erfindung umfasst der leistungsverzweigte Achsantrieb eine Vorgelegewelle und ein erstes Schaltelement und einen zweiten und dritten Radsatz. Das erste Zusatzantriebselement ist mit dem zweiten Schaltelement mit der Vorgelegewelle verbindbar, bevorzugt antreibbar verbindbar, besonders bevorzugt lösbar antreibbar verbindbar. Das erste Zusatzantriebselement ist über den zweiten Radsatz mit dem zweiten Schaltelement verbunden. Die Vorgelegewelle ist über den dritten Radsatz mit dem Leistungsverzweigungsgetriebe verbunden, insbesondere antreibbar verbunden.

Mit anderen Worten, das erste Zusatzantriebselement ist also mit dem zweiten Schaltelement derart mit der Vorgelegewelle verbindbar, dass das Leistungsverzweigungsgetriebe mit dem ersten Zusatzantriebselement antreibbar ist. Dadurch kann eine effiziente Übertragung der Drehzahl und/oder des Drehmoments vom ersten Zusatzantriebselement an das Leistungsverzweigungsgetriebe realisiert werden.

Das zweite Schaltelement kann betätigbar, bevorzugt selektiv betätigbar, besonders bevorzugt schliessbar und öffenbar und/oder einrückbar und/oder schaltbar und/oder selektiv eingreifbar sein. Im Speziellen kann das zweite Schaltelement als zweite Kupplung ausgeführt sein. Das zweite Schaltelement kann auf oder an der Vorgelegewelle angeordnet sein. Mit betätigtem, insbesondere geschlossenem, zweitem Schaltelement, kann also eine Drehbewegung und/oder eine Kraft und/oder ein Drehmoment vom ersten Zusatzantriebselement an das Leistungsverzweigungsgetriebe und/oder umgekehrt übertragbar sein. Mit nicht betätigtem, insbesondere geöffnetem, zweitem Schaltelement, kann also keine Drehbewegung und/oder keine Kraft und/oder kein Drehmoment vom ersten Zusatzantriebselement an das Leistungsverzweigungsgetriebe übertragbar sein. Mit anderen Worten, das erste Zusatzantriebselement kann also mit dem geschlossenen zweiten Schaltelement derart mit dem Leistungsverzweigungsgetriebe verbunden sein, dass das Leistungsverzweigungsgetriebe mit dem ersten Zusatzantriebselement und/oder umgekehrt antreibbar ist. Dadurch kann das erste Zusatzantriebselement beispielsweise derart auf das Leistungsverzweigungsgetriebe einwirken, dass ein Vorlauf der ersten Fahrzeugachse einstellbar und/oder verstellbar, insbesondere steuerbar und/oder regelbar ist.

Ausserdem kann ein "Generator" Betriebsmodus des leistungsverzweigten Achsantriebs oder Fahrzeugs, insbesondere in einem Fahr- oder Schubbetrieb des leistungsverzweigten Achsantriebs und/oder des landwirtschaftlichen Fahrzeugs, beispielsweise zum Laden des Speicherelements, realisiert werden. Im "Generator" Betriebsmodus des leistungsverzweigten Achsantriebs oder Fahrzeugs kann das erste Zusatzantriebselement generatorisch betrieben werden. Im generatorischen Betrieb des ersten Zusatzantriebselements kann, insbesondere mit geschlossenem zweitem Schaltelement, mit dem Hauptantriebselement eine Drehbewegung und/oder eine Kraft und/oder ein Drehmoment in das Leistungsverzweigungsgetriebe und vom Leistungsverzweigungsgetriebe in oder an das erste Zusatzantriebselement eingeleitet oder übertragen werden. Die in das erste Zusatzantriebselement eingeleitete Drehbewegung und/oder der Kraft und/oder des Drehmoments kann vom ersten Zusatzantriebselement in elektrische Energie umgewandelt werden und die elektrische Energie im Speicherelement gespeichert werden. Das Speicherelement ist in dieser Anordnung optional, lediglich das gerade beschriebene Rekuperieren, insbesondere im "Generator" Betriebsmodus des Fahrzeugs, durch den generatorischen Betrieb beim ersten Zusatzantriebselement entfällt.

Bei einem Fahrzeug mit einer lenkbaren ersten Fahrzeugachse können beispielsweise die Bodeneingriffsmittel, insbesondere Räder oder Raupen, eine größere Wegstrecke zurücklegen als die Bodeneingriffsmittel, insbesondere Räder oder Raupen, der zweiten Fahrzeugachse des Fahrzeugs. Bei Fahrzeugen mit einem starren Allradantrieb, das heißt ohne ein Längsdifferenzial, ist ein konstantes Drehzahlverhältnis zwischen der ersten und zweiten Fahrzeugachse des Fahrzeugs eingestellt. Insbesondere bei Kurvenfahrten führt dies jedoch zu einer nachteiligen Lenkbarkeit des Fahrzeugs. Um dies zu verhindern beziehungsweise zu kompensieren wird im Fahrzeug ein konstruktiver Vorlauf vorgesehen. Dies bedeutet, dass beispielsweise die Bodeneingriffsmittel der ersten Fahrzeugachse eine höhere Umfangsgeschwindigkeit aufweisen als die der zweiten Fahrzeugachse. Es kann also ein "Vorlauf" Betriebsmodus des leistungsverzweigten Achsantriebs und/oder des landwirtschaftlichen Fahrzeugs realisiert werden, insbesondere in einem Fahr- oder Schubbetrieb des Achsantriebs und/oder des Fahrzeugs und/oder einer Fahrt des Fahrzeugs auf einem Feld, beispielsweise der Bearbeitung des Feldes oder dem Begleiten einer Erntemaschine als Zuggespann mit einem Transportwagen. Im "Vorlauf" Betriebsmodus des leistungsverzweigten Achsantriebs und/oder Fahrzeugs kann das erste Zusatzantriebselement motorisch betrieben werden. Dabei kann bei betätigtem, bevorzugt mit geschlossenem zweitem Schaltelement eine zusätzliche Drehbewegung und/oder eine zusätzliche Kraft und/oder ein zusätzliches Drehmoment des ersten Zusatzantriebselement vom ersten Zusatzantriebselement mit dem zweiten Schaltelement an das Leistungsverzweigungsgetriebe übertragen werden. Die an das Leistungsverzweigungsgetriebe übertragene Drehbewegung und/oder Kraft und/oder das übertragene Drehmoment des Hauptantriebselements und die an das Leistungsverzweigungsgetriebe übertragene zusätzliche Drehbewegung und/oder Kraft und/oder das übertragene zusätzliche Drehmoment des ersten Zusatzantriebselements können mit dem Leistungsverzweigungsgetriebe überlagert werden und eine resultierende Drehbewegung und/oder eine resultierende Kraft und/oder ein resultierendes Drehmoment, insbesondere mit oder über das erste Differential, auf die erste Fahrzeugachse übertragbar sein. Vorteilhafterweise kann so ein Vorlauf der ersten Fahrzeugachse einstellbar und/oder verstellbar, insbesondere steuerbar und/oder regelbar sein. Im "Vorlauf" Betriebsmodus kommt die Lenkunterstützung durch das Zuschalten des ersten Zusatzantriebselements zum Tragen, also durch eine Änderung, insbesondere durch eine Erhöhung oder Reduzierung, der Drehzahl und/oder Kraft und/oder des Drehmoments an der ersten Fahrzeugachse, was insbesondere bei engen Kurvenfahrten im Vorgewende eines Feldes vorteilhaft ist, um kleinere Kurvenradien fahren zu können.

Mit dem zweiten Radsatz kann eine Drehbewegung und/oder eine Kraft und/oder ein Drehmoment des ersten Zusatzantriebelements vom ersten Zusatzantriebelement zum zweiten Schaltelement und/oder umgekehrt übertragen oder eingeleitet werden und vom zweiten Schaltelement weiter an oder in die Vorgelegewelle und/oder umgekehrt übertragen oder eingeleitet werden. Mit geschlossenem zweitem Schaltelement kann also eine Drehbewegung und/oder eine Kraft und/oder ein Drehmoment vom ersten Zusatzantriebselement an den zweiten Radsatz und vom zweiten Radsatz über das zweite oder mit dem zweiten Schaltelement an die Vorgelegewelle und weiter an das Leistungsverzweigungsgetriebe und/oder umgekehrt übertragbar Mit dem dritten Radsatz kann eine Drehbewegung und/oder eine Kraft und/oder ein Drehmoment der Vorgelegewelle an oder in das Leistungsverzweigungsgetriebe und/oder umgekehrt übertragen oder eingeleitet werden. Dadurch kann eine Drehbewegung und/oder eine Kraft und/oder ein Drehmoment vom ersten Zusatzantriebselement über den zweiten Radsatz an das geschlossene zweite Schaltelement weiter an die Vorgelegewelle und von der Vorgelegewelle über den dritten Radsatz an das Leistungsverzweigungsgetriebe und vom Leistungsverzweigungsgetriebe, insbesondere über das erste Differential, auf die erste Fahrzeugachse übertragbar sein.

Der zweite Radsatz kann ein zweites Zahnradpaar, insbesondere ein erstes Schaltrad und ein drittes Festrad umfassen. Das dritte Festrad kann mit dem ersten Zusatzantriebselement, insbesondere einer Abtriebswelle des ersten Zusatzantriebselements, verbunden sein, bevorzugt antreibbar verbunden, besonders bevorzugt drehfest und/oder antreibbar verbunden sein. Das erste Schaltrad kann drehbar auf der Vorgelegewelle gelagert sein, insbesondere frei drehbar und/oder axial verschiebbar auf der Vorgelegewelle gelagert sein. Ebenso kann das erste Schaltrad mit einer Seite des zweiten Schaltelements verbunden, bevorzugt drehfest und/oder antreibbar verbunden sein. Das erste Schaltrad kann mit dem dritten Festrad kämmen, sich also insbesondere in ständigem Kämmeingriff mit diesem befinden. Das zweite Schaltelement kann also über das erste oder mit dem ersten Schaltrad und über das dritte oder mit dem dritten Festrad mit dem ersten Zusatzantriebselement verbunden, bevorzugt antreibbar verbunden sein. Bei geschlossenem zweitem Schaltelement kann die Vorgelegewelle über das zweite Schaltelement mit dem ersten Schaltrad drehfest verbunden sein, sodass mit dem dritten Festrad eine Drehbewegung und/oder eine Kraft und/oder ein Drehmoment des ersten Zusatzantriebselement übertragbar ist.

Der dritte Radsatz kann ein drittes Zahnradpaar, insbesondere ein viertes und ein fünftes Festrad umfassen. Das vierte Festrad kann mit der Vorgelegewelle und das fünfte Festrad mit dem Leistungsverzweigungsgetriebe verbunden sein. Das vierte Festrad kann mit dem fünften Festrad kämmen, sich also insbesondere in ständigem Kämmeingriff mit diesem befinden. Mit dem vierten und fünften Festrad kann also eine Drehbewegung und/oder eine Kraft und/oder ein Drehmoment von der Vorgelegewelle an das Leistungsverzweigungsgetriebe und/oder umgekehrt übertragbar sein. Vorteilhafterweise kann mit dem zweiten und dritten Radsatz die vom ersten Zusatzantriebselement zum Leistungsverzweigungsgetriebe übertragen Drehzahl abgesenkt und das übertragene Drehmoment erhöht werden. Dadurch kann also eine Übertragung der Drehzahl und/oder des Drehmoments vom ersten Zusatzantrieb an das Leistungsverzweigungsgetriebe realisiert und verbessert werden. Ebenso kann so vorteilhafterweise ein Vorlauf der ersten Fahrzeugachse effizienter einstellbar und/oder verstellbar, insbesondere effizienter steuerbar und/oder regelbar sein.

In Ausgestaltung der Erfindung ist das Leistungsverzweigungsgetriebe als Planetengetriebe ausgeführt. Bei dem Leistungsverzweigungsgetriebe handelt es sich bevorzugt um ein Planetengetriebe beziehungsweise Umlaufrädergetriebe. Ein solches Planetengetriebe kann wenigstens drei Komponenten, insbesondere Zahnräder und/oder Wellen aufweisen. Unter einer Komponente kann dabei ein- und/oder Ausgang zur Übertragung einer Drehbewegung und/oder Kraft und/oder eines Drehmoments in das und/oder aus dem Leistungsverzweigungsgetriebe verstanden werden. In einem Zwei-Komponenten-Betrieb ist eine der Komponenten, insbesondere der Zahnräder und/oder Wellen, festgesetzt, wodurch sich zwangsläufig die Übertragung einer Drehung und/oder einer Kraft und/oder eines Drehmoments der nicht angetriebenen Komponente ergibt. In einem Drei-Komponenten-Betrieb arbeitet das Planetengetriebe als Summiergetriebe oder als Verteilergetriebe. Bei dem Summiergetriebe sind zwei Komponenten treibend ausgeführt und eine Komponente ist getrieben. Im Gegensatz dazu ist bei einem Verteilergetriebe eine Komponente treibend ausgeführt und zwei Komponenten sind getrieben. Ein Hohlrad des Leistungsverzweigungsgetriebes kann über den oder mit dem ersten Radsatz mit der dritten Welle verbunden sein, insbesondere antreibbar verbunden. Im Speziellen kann das Hohlrad mit dem zweiten Festrad verbunden sein, bevorzugt drehfest und/oder antreibbar verbunden sein. Dadurch kann eine Kraft und/oder eine Drehbewegung und/oder ein Drehmoment vom Hauptantriebselement über das Hauptgetriebe an die dritte Welle und weiter über den ersten Radsatz an das Hohlrad und somit insbesondere das Leistungsverzweigungsgetriebe bzw. das Planetengetriebe übertragbar sein. Die erste Fahrzeugachse kann über die zweite oder mit der zweiten Welle mit einem Planetenträger beziehungsweise einem Steg des Leistungsverzweigungsgetriebes verbunden, insbesondere antreibbar verbunden sein. Im Speziellen kann der Planetenträger mit der zweiten Welle verbunden sein, bevorzugt drehfest und/oder antreibbar verbunden sein. Dadurch kann eine Kraft und/oder eine Drehbewegung und/oder ein Drehmoment vom Planetenträger des Leistungsverzweigungsgetriebes auf die zweite Welle und weiter, insbesondere über das erste Differential, an oder in die erste Fahrzeugachse und/oder umgekehrt übertragbar oder einleitbar sein. An dem Planetenträger kann ein Planetensatz, insbesondere eines oder mehrere Planetenräder, drehbar gelagert, die jeweils mit Sonnenrad und Hohlrad kämmen, sich also insbesondere in ständigem Kämmeingriff mit diesen befinden. Der Planetensatz kann insbesondere einen Satz von Planetenrädern aufweisen. Der Planetensatz kann drei Planetenräder umfassen. Darüber hinaus kann das Sonnenrad des Leistungsverzweigungsgetriebes über das fünfte Festrad und das vierte Festrad, und insbesondere weiter über die Vorgelegewelle und das zweite Schaltelement und den zweiten Radsatz, mit dem ersten Zusatzantriebselement verbunden, insbesondere antreibbar verbunden sein. Im Speziellen kann das Sonnenrad mit dem fünften Festrad verbunden sein, bevorzugt drehfest und/oder antreibbar verbunden sein. Dadurch kann eine Kraft und/oder ein Drehmoment vom ersten Zusatzantriebselement über den zweiten Radsatz und das zweite Schaltelement an die Vorgelegewelle und von der Vorgelegewelle über das vierte Festrad und das fünfte Festrad an das Sonnenrad des Leistungsverzweigungsgetriebes übertragbar sein. Dadurch können die oben genannten Vorteile des leistungsverzweigten Achsantriebs realisiert werden.

In Ausgestaltung der Erfindung ist zwischen dem ersten Zusatzantriebselement und dem Leistungsverzweigungsgetriebe eine zweite Bremse angeordnet. Der leistungsverzweigte Achsantrieb kann also zusätzlich die zweite Bremse umfassen. Die zweite Bremse kann auf der Vorgelegewelle angeordnet sein. Im Speziellen kann das rotierende Element der zweiten Bremse mit der Vorgelegewelle verbunden, insbesondere drehfest verbunden sein, und das feststehende Element der zweiten Bremse beispielsweise mit einem Getriebegehäuse oder einem Rahmen verbunden sein. Die Vorgelegewelle kann mit der zweiten Bremse gegen Drehung haltbar oder gehemmt sein, bevorzugt lösbar gegen Drehung haltbar oder gehemmt sein. Vorteilhafterweise können mit der zweiten Bremse die oben beschriebenen Betriebsmodi realisierbar sein. Ausserdem kann mit der zweiten Bremse ein Fahrzustand realisierbar sein, bei dem eine starre Verbindung zwischen der ersten und zweiten Fahrzeugachse erforderlich ist. In diesem Fall muss das erste Zusatzantriebselement nicht permanent einen Gegenmoment aufbauen und somit elektrische Energie verbrauchen. Alternativ zur zweiten Bremse kann der leistungsverzweigte Achsantrieb auch ein fünftes Schaltelement umfassen. In diesem Fall wird keine zweite Bremse verwendet, sondern das fünfte Schaltelement. Das fünfte Schaltelement kann betätigbar, bevorzugt selektiv betätigbar, besonders bevorzugt schliessbar und öffenbar und/oder einrückbar und/oder schaltbar und/oder selektiv eingreifbar sein. Das fünfte Schaltelement kann als fünfte Kupplung ausgebildet sein. Mit betätigtem, insbesondere geschlossenem, fünftem Schaltelement, kann also insbesondere nur eine mechanische Drehbewegung und/oder eine mechanische Kraft und/oder ein mechanisches Drehmoment übertragen werden. Wenn das fünfte Schaltelement geschlossen ist, führt dies zu einer Blockierung des Leistungsverzweigungsgetriebes und dazu, dass sich das Hohlrad oder der Ring des Leistungsverzweigungsgetriebes mit der gleichen Drehzahl wie das Sonnenrad und die zweite Welle und/oder der Träger dreht. Das Übersetzungsverhältnis i ist in diesem Fall i=1 und die Drehzahl und/oder Kraft und/oder das Drehmoment kann nur mechanisch übertragen werden. Mit nicht betätigtem, insbesondere geöffnetem, fünftem Schaltelement kann eine Drehbewegung und/oder eine Kraft und/oder ein Drehmoment vom ersten Zusatzantriebselement an das Leistungsverzweigungsgetriebe übertragbar sein. Mit anderen Worten, mit betätigtem, insbesondere geschlossenem, fünftem Schaltelement können der dritte Radsatz, insbesondere das fünfte Festrad, und/oder das Leistungsverzweigungsgetriebe, insbesondere das Sonnenrad, mit dem fünften oder über das fünfte Schaltelement mit der zweiten Welle verbunden sein, insbesondere drehfest miteinander verbunden sein. Wenn das fünfte Schaltelement geschlossen ist, beträgt die relative Drehzahl des Sonnenrads und der zweiten Welle 0 U/min. In diesem Fall kann eine Drehbewegung und/oder eine Kraft und/oder ein Drehmoment nur mechanisch übertragen werden. Es bietet auch die Möglichkeit, das erste Zusatzantriebselement zu verwenden, um eine Kraft und/oder ein Drehmoment aus dem leistungsverzweigten Achsantrieb, insbesondere in den oben genannten "Parkbremse" und "Fahrzeugachsen-Bremse" Betriebsmodi zu extrahieren.

Gemäß einer bevorzugten Weiterbildung umfasst der leistungsverzweigte Achsantrieb ein zweites Zusatzantriebselement. Das zweite Zusatzantriebselement kann mit dem Hauptantriebselement, insbesondere über oder mit der ersten Welle, verbunden, bevorzugt antreibbar verbunden sein. Die vom Hauptantriebselement erzeugbare Kraft und/oder die erzeugbare Drehbewegung und/oder das erzeugbare Drehmoment ist in oder an das zweite Zusatzantriebselement und/oder das Hauptgetriebe einleitbar oder übertragbar. Das durch das Hauptantriebselement erzeugbare Drehmoment und/oder die erzeugbare Kraft und/oder die erzeugbare Rotationsbewegung kann bevorzugt über eine Übersetzungsstufe, beispielsweise einen Riemen- oder Kettentrieb oder einen vierten Radsatz oder eine vierte Welle, in das zweite Zusatzantriebselement einleitbar und/oder übertragbar sein. Das zweite Zusatzantriebselement kann zwei Drehrichtungen (erste Richtung, zweite Richtung) aufweisen. Beispielsweise kann das durch das Hauptantriebselement erzeugbare Drehmoment und/oder die erzeugbare Kraft und/oder die erzeugbare Drehbewegung über die erste Welle auf die Übersetzungsstufe, insbesondere den vierten Radsatz, und dann an das zweite Zusatzantriebselement übertragbar sein. Die Übersetzungsstufe, insbesondere der vierte Radsatz kann auch ein viertes Zahnradpaar, insbesondere ein sechstes und ein siebtes Festrad umfassen. Das sechste Festrad kann mit der ersten Welle und das siebte Festrad beispielsweise mit einer Abtriebswelle des zweiten Zusatzantriebselements verbunden, bevorzugt drehfest verbunden sein. Das sechste Festrad kann mit dem siebten Festrad kämmen, sich also insbesondere in ständigem Kämmeingriff mit diesem befinden. Also kann mit dem sechsten und siebten Festrad eine Drehbewegung und/oder eine Kraft und/oder ein Drehmoment von der ersten Welle an oder in das zweite Zusatzantriebselement übertragen oder eingeleitet werden. Bei dem zweiten Zusatzantriebselement handelt es sich bevorzugt um eine elektrische Maschine, besonders bevorzugt einen Elektromotor. Darüber hinaus ist auch eine Ausführung in Form eines hydraulischen Antriebs, beispielsweise einem hydrostatischen Antriebselement, denkbar. Das zweite Zusatzantriebselement kann über die Verbindungsleitung mit dem Speicherelement und/oder dem ersten Zusatzantriebselement leistungselektronisch verbunden. Das zweite Zusatzantriebselement kann ausserdem, insbesondere über die Verbindungsleitung und/oder eine weitere Verbindungsleitung, mit einem Nebenabtrieb leistungselektronisch verbunden sein. Wie bereits erwähnt, ist unter einer leistungselektronischen Verbindung zu verstehen, dass erzeugte elektrische Energie beziehungsweise gespeicherte elektrische Energie dem Speicherelement zugeführt oder entnommen oder den Verbrauchern, beispielsweise dem Nebenabtrieb und/oder dem zweiten Zusatzantriebselement zugeführt werden kann. Der Nebenabtrieb ist dabei, ebenso wie das Speicherelement, optional vorgesehen. Dies bedeutet, dass nicht zwingend ein Nebenabtrieb vorgesehen sein muss. Darüber hinaus sind jedoch auch Ausführungen mit mehr als einem Nebenabtrieb denkbar. Es sind auch Ausführungen von leistungsverzweigten Achsantrieben denkbar, bei denen dem Speicherelement nur dann Energie entnommen oder erzeugt wird, wenn diese, beispielsweise für den direkten Betrieb des Nebenabtriebs und/oder des zweiten Zusatzantriebselements, benötigt wird.

Das zweite Zusatzantriebselement kann sowohl generatorisch, als auch motorisch betreibbar sein. Im generatorischen Betrieb wirkt das zweite Zusatzantriebselement bremsend, das heißt, dass eine mechanische Energie aus einer Drehbewegung und/oder eine Kraft und/oder ein Drehmoment beispielsweise in eine elektrische Energie umgewandelt wird. Im Gegensatz dazu wird im motorischen Betrieb des zweite Zusatzantriebselements Energie, insbesondere elektrische Energie, in das zweite Zusatzantriebselement eingespeist, wodurch eine Drehbewegung und/oder eine Kraft und/oder ein Drehmoment erzeugt wird, wodurch das zweite Zusatzantriebselement treibend oder antreibend wirkt. Das erste und zweite Zusatzantriebselement können gleichzeitig beide generatorisch betrieben werden, beide motorisch betrieben werden oder eines generatorisch und eines motorisch betrieben werden.

Im "Vorlauf" Betriebsmodus kann das zweite Zusatzantriebselement generatorisch und das erste Zusatzantriebselement motorisch betrieben werden. Das zweite Zusatzantriebselement kann generatorisch betreibbar sein, das heißt, dass die eingeleitete Energie in Form der Drehbewegung und/oder der Kraft und/oder des Drehmoments in elektrische Energie umgewandelt wird. Diese elektrische Energie kann zum Betreiben des Nebenabtriebs, bevorzugt elektrischen Nebenabtriebs verwendet werden und/oder elektrische Energie kann in dem optionalen Speicherelement gespeichert werden und/oder die elektrische Energie kann dem ersten Zusatzantriebselement bereitgestellt werden, wobei das erste Zusatzantriebelement bevorzugt motorisch betrieben wird.

Das zweite Zusatzantriebselement kann auch motorisch betrieben werden. Das zweite Zusatzantriebselement kann zusätzlich zu der durch das Hauptantriebselement eingeleiteten Drehbewegung und/oder Kraft und/oder dem eingeleiteten Drehmoment ebenfalls eine Drehbewegung und/oder Kraft und/oder ein Drehmoment in das Hauptgetriebe einleiten. Somit kann beispielsweise kurzzeitig eine Erhöhung der Antriebsleistung erfolgen, soweit dies durch den jeweiligen Fahrzustand erforderlich ist.

Zum Laden des Speicherelements können beispielsweise aber auch das erste Zusatzantriebselement und/oder das zweite Zusatzantriebselement generatorisch betrieben werden, insbesondere im "Generator" Betriebsmodus oder Fahr- oder Schubbetrieb. Dazu kann mit dem Hauptantriebselement eine Drehbewegung und/oder eine Kraft und/oder ein Drehmoment in das zweite Zusatzantriebselement und über das Hauptgetriebe in das Leistungsverzweigungsgetriebe und weiter in das erste Zusatzantriebselement eingeleitet oder übertragen werden.

In Ausgestaltung der Erfindung ist dem leistungsverzweigten Achsantrieb zumindest eine Steuerungsvorrichtung zugeordnet, insbesondere kann der leistungsverzweigte Achsantrieb die Steuerungsvorrichtung umfassen. Die Steuerungsvorrichtung kann, bevorzugt über eine oder mehrere Steuerleitungen, besonders bevorzugt über eine oder mehrere bidirektionale Steuerleitungen, mit dem ersten und/oder zweiten Zusatzantriebselement und/oder dem Nebenabtrieb und/oder dem Speicherelement und/oder dem ersten und/oder zweiten und/oder dritten und/oder vierten Schaltelement, insbesondere deren Aktuatoren, und/oder dem Hauptantriebselement und/oder dem Hauptgetriebe und/oder dem Leistungsverzweigungsgetriebe und/oder einer ersten und/oder zweiten Bremse, insbesondere deren Aktuatoren, zur Steuerung und/oder Regelung und/oder deren Ansteuerung verbunden sein, insbesondere mit diesen signalverbunden und/oder signalübertragend und/oder datenleitend verbunden sein.

In Ausgestaltung der Erfindung ist die Steuerungsvorrichtung zur Ansteuerung des leistungsverzweigte Achsantrieb, insbesondere der ersten und/oder zweiten Bremse, insbesondere deren Aktuatoren, und/oder des ersten und/oder zweiten und/oder eines dritten und/oder vierten Schaltelements, insbesondere deren Aktuatoren, und/oder des Leistungsverzweigungsgetriebes und/oder dem ersten und/oder zweiten Zusatzantriebselement und/oder dem Hauptantriebselement und/oder dem Hauptgetriebe, in Abhängigkeit von einem Betriebsmodus des leistungsverzweigten Achsantriebs und/oder Fahrzeugs eingerichtet und/oder ausgebildet. Dabei können mehrere unterschiedliche Betriebsmodi, insbesondere die oben genannten Betriebsmodi, vorgesehen sein, die insbesondere auswählbar und der zumindest einen Steuerungsvorrichtung zur Ansteuerung der leistungsverzweigten Achsantriebs vorgebbar sind. Mit anderen Worten, die Steuerungsvorrichtung ist derart ausgebildet, dass der leistungsverzweigte Achsantrieb, insbesondere die oben genannten Bauteile des leistungsverzweigten Achsantriebs, in Abhängigkeit von einem Betriebsmodus des leistungsverzweigten Achsantrieb und/oder des Fahrzeugs ansteuerbar sind. Insbesondere die oben genannten Betriebsmodi "Generator" und/oder "Vorlauf" und/oder "Voll-Elektrisch" und/oder "Parkbremse" und/oder "Fahrzeugachsen-Bremse" und/oder sowohl der generatorische, als auch der motorische Betrieb des ersten und zweiten Zusatzantriebselements können vorteilhafterweise mit der Steuerungsvorrichtung ansteuerbar sein.

In Ausgestaltung der Erfindung ist zwischen dem Hauptantriebselement und dem zweiten Zusatzantriebselement und/oder dem Hauptantriebselement und dem Hauptgetriebe ein drittes Schaltelement angeordnet, und/oder zwischen dem Hauptgetriebe und dem Hauptantriebselement und/oder dem Hauptgetriebe und dem zweiten Zusatzantriebselement ein viertes Schaltelement angeordnet. Das dritte und vierte Schaltelement können auf oder an der ersten Welle angeordnet sein. Das Hauptantriebselement kann über das dritte oder mit dem dritten Schaltelement mit dem zweiten Zusatzantriebselement und/oder dem Hauptgetriebe verbindbar, bevorzugt lösbar verbindbar, besonders bevorzugt lösbar drehfest und/oder lösbar antreibbar verbindbar sein. Das dritte Schaltelement ist bevorzugt eine dritte Kupplung. Bei geöffnetem drittem Schaltelement kann weder von dem Hauptantriebselement eine Drehbewegung und/oder eine Kraft und/oder ein Drehmoment in den leistungsverzweigten Achsantrieb eingeleitet werden, noch umgekehrt aus dem leistungsverzweigten Achsantrieb in das Hauptantriebselement eingeleitet werden. Mit betätigtem, insbesondere geschlossenem, drittem Schaltelement kann eine Drehbewegung und/oder eine Kraft und/oder ein Drehmoment vom Hauptantriebselement an das das Hauptgetriebe und/oder, insbesondere über die Übersetzungsstufe, bevorzugt den vierten Radsatz, an das zweite Zusatzantriebselement und/oder umgekehrt übertragbar sein. Dadurch kann somit bei geschlossenem drittem Schaltelement im Fahr- und/oder Schubbetrieb bei generatorischem Betrieb des ersten und/oder zweiten Zusatzantriebselements Bremsenergie in elektrische Energie umgewandelt und in dem Speicherelement gespeichert werden. Bei nicht betätigtem drittem Schaltelement kann somit lediglich ein rein elektrischer Fahrzustand durch das motorische Betreiben des ersten Zusatzantriebselements und/oder des zweiten Zusatzantriebselements realisierbar sein. Das Hauptgetriebe kann über das vierte oder mit dem vierten Schaltelement mit dem zweiten Zusatzantriebselement und/oder dem Hauptantriebselement verbindbar, bevorzugt lösbar verbindbar, besonders bevorzugt lösbar drehfest und/oder lösbar antreibbar verbindbar sein. Das vierte Schaltelement kann bevorzugt eine vierte Kupplung sein. Mit betätigtem, insbesondere geschlossenem, viertem Schaltelement kann also eine Drehbewegung und/oder eine Kraft und/oder ein Drehmoment vom Hauptgetriebe in oder an den leistungsverzweigten Achsantrieb und/oder umgekehrt eingeleitet oder übertragen werden. Mit nicht betätigtem, insbesondere geöffnetem, drittem Schaltelement, kann also keine Drehbewegung und/oder keine Kraft und/oder kein Drehmoment vom Hauptgetriebe in oder an den leistungsverzweigten Achsantrieb und/oder umgekehrt eingeleitet oder übertragen werden. Bei geöffnetem viertem Schaltelement ist also das Hauptgetriebe vom Hauptantriebselement und/oder dem zweite Zusatzantriebselement entkoppelt. Dies bedeutet, dass ein mechanisch eingeleiteter Vortrieb über das Hauptgetriebe nicht darstellbar ist. In einer alternativen Ausführungsform kann das vierte Schaltelement anstatt zwischen dem Hauptgetriebe und dem Hauptantriebselement beziehungsweise dem Hauptgetriebe und dem zweiten Zusatzantriebselement auch auf der Seite des Getriebeausgangs des Hauptgetriebes angeordnet sein. Im Speziellen können das dritte und/oder vierte Schaltelement auch im Hauptgetriebe angeordnet sein. Alternativ dazu ist auch eine Anordnung ohne ein drittes und viertes Schaltelement denkbar, jedoch muss sich dabei das Hauptgetriebe in einer Neutralstellung befinden, um funktional den gleichen Effekt zu erzielen, wie ein geöffnetes viertes Schaltelement. Unter einer Neutralstellung des Hauptgetriebes ist dabei zu verstehen, dass zwischen Getriebeeingang und Getriebeausgang des Hauptgetriebes kein Kraftschluss vorliegt.

Die Erfindung betrifft weiter ein landwirtschaftliches Fahrzeug, insbesondere einen Traktor oder Schlepper, umfassend einen leistungsverzweigten Achsantrieb nach mindestens einem der Ansprüche 1 bis 7. Das erfindungsgemässe landwirtschaftliche Fahrzeug weist die oben beschriebenen Vorteile des erfindungsgemässen leistungsverzweigten Achsantriebs auf.

In Ausgestaltung der Erfindung ist der leistungsverzweigte Achsantrieb zum Antreiben des Fahrzeugs, insbesondere wahlweisen Antreiben der ersten und/oder zweiten Fahrzeugachse ausgebildet. Im Speziellen ist mit einer Drehbewegung und/oder Kraft und/oder einem Drehmoment des Hauptantriebselements wenigstens die zweite Fahrzeugachse über das Hauptgetriebe antreibbar. Die erste Fahrzeugachse kann dabei eine lenkbare Vorderachse und/oder die zweite Fahrzeugachse eine Hinterachse sein.

In Ausgestaltung der Erfindung ist die Steuerungsvorrichtung zur Bestimmung von unterschiedlichen Betriebsmodi des landwirtschaftlichen Fahrzeugs, insbesondere des leistungsverzweigten Achsantriebs eingerichtet. Denkbar ist dabei, dass fahrsituationsabhängig ein Betriebsmodus automatisch oder von einer Bedienperson des landwirtschaftlichen Fahrzeugs auswählbar ist und der Steuerungsvorrichtung vorgegeben wird. Zusätzlich oder alternativ kann in Abhängigkeit von der Betätigung einer der Aktuatoren und/oder Bauteile des leistungsverzweigten Achsantriebs ein Betriebsmodus bestimmt werden.

Der erfindungsgemässe leistungsverzweigte Achsantrieb und/oder das erfindungsgemässe landwirtschaftliche Fahrzeug können ausserdem die Steuerungsvorrichtung umfassen. Die Steuerungsvorrichtung kann ein elektronisches Modul und/oder ein eingebettetes System sein und/oder ein Speichermodul und/oder einen Prozessor umfassen. Die Steuerungsvorrichtung kann mit dem ersten und/oder zweiten Zusatzantriebselement und/oder dem Nebenabtrieb und/oder dem Speicherelement und/oder dem ersten und/oder zweiten und/oder dritten und/oder vierten Schaltelement und/oder dem Hauptantriebselement und/oder dem Hauptgetriebe und/oder dem Leistungsverzweigungsgetriebe und/oder der ersten und/oder zweiten Bremse verbunden sein, bevorzugt signalverbunden und/oder signalübertragend und/oder datenleitend verbunden sein. Unter einer signalverbundenen und/oder signalübertragenden und/oder datenleitenden Verbindung ist dabei zu verstehen, dass ein Austausch von Signalen zwischen den verbundenen Bauteilen stattfindet. Die Signale werden in der Steuerungsvorrichtung verarbeitet und dienen somit zur Steuerung und/oder Regelung und Ansteuerung der signalverbundenen und/oder signalübertragend und/oder datenleitend miteinander verbundenen Bauteile. Die Verbindung kann kabelgebunden, insbesondere also mit Kabel, und/oder kabellos, also per Funk, beispielsweise mit Bluetooth realisiert sein. Der Kommunikationsbus kann beispielsweise Isobus, CAN-Bus oder ähnliches sein kann. Ausserdem kann mit der Steuerungsvorrichtung eine weitere Steuerungsvorrichtung steuerbar und/oder regelbar sein. Die weitere Steuerungsvorrichtung (engl. ECU = electronic control unit oder ECM = electronic control module) kann wie die Steuerungsvorrichtung ausgebildet sein. Die Steuerungsvorrichtung kann dem Fahrzeug zugeordnet, insbesondere am Fahrzeug angeordnet sein oder dem leistungsverzweigten Achsantrieb zugeordnet sein oder der leistungsverzweigte Achsantrieb kann die Steuerungsvorrichtung umfassen. Die Steuerungsvorrichtung kann auch zweiteilig beispielsweise als Teil des Fahrzeugs und als Teil des leistungsverzweigten Achsantriebs ausgebildet sein. Ausserdem können das Hauptantriebselement zur Bereitstellung eines Drehmoments und/oder das Hauptgetriebe und/oder das Leistungsverzweigungsgetriebe und/oder das erste und/oder zweite Zusatzantriebselement und/oder der Nebenabtrieb und/oder das Speicherelement und/oder das erste und/oder zweite und/oder dritte und/oder vierte Schaltelement und/oder die erste und/oder zweite Bremse mit der Steuerungsvorrichtung einstellbar und/oder verstellbar sein, und/oder bevorzugt steuerbar und/oder regelbar sein. Die Steuerungsvorrichtung kann unmittelbar mit der in einer Kabine des Fahrzeugs angeordneten Ein- und Ausgabeeinheit Verbindung stehen, durch welche von einer Bedienperson eingegebene Daten an die Steuerungsvorrichtung übertragen oder von dieser empfangen und ausgegeben werden können. Denkbar ist aber auch, dass die Steuerungsvorrichtung mittelbar durch eine übergeordnete Steuerungseinheit mit der Ein- und Ausgabeeinheit verbunden ist.

Der leistungsverzweigte Achsantrieb kann einen ersten Aktuator und/oder einen zweiten Aktuator und/oder einen dritten Aktuator und/oder einen vierten Aktuator und/oder einen fünften Aktuator und/oder einen sechsten Aktuator umfassen. Dem ersten Schaltelement kann der erste Aktuator und/oder dem zweiten Schaltelement kann der zweite Aktuator und/oder dem dritten Schaltelement kann der dritte Aktuator und/oder dem vierten Schaltelement kann der vierte Aktuator und/oder der ersten Bremse der fünfte Aktuator und/oder der zweiten Bremse der sechste Aktuator zugeordnet sein. Der erste und/oder zweite und/oder dritte und/oder vierte und/oder fünfte und/oder sechste Aktuator können mit der Steuerungsvorrichtung verbunden sein, bevorzugt signalverbunden und/oder signalübertragend und/oder datenleitend verbunden sein. Der erste und/oder zweite und/oder dritte und/oder vierte und/oder fünfte und/oder sechste Aktuator können mit der Steuerungsvorrichtung betätigbar, insbesondere schliessbar sein.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines ersten Ausführungsbeispiels eines erfindungsgemässen landwirtschaftlichen Fahrzeugs mit einem ersten Ausführungsbeispiel eines erfindungsgemässen leistungsverzweigten Achsantriebs, und
- Fig. 2: eine schematische Darstellung des ersten Ausführungsbeispiels eines nicht erfindungsgemässen leistungsverzweigten Achsantriebs, und
- Fig. 3: eine schematische Darstellung eines zweiten Ausführungsbeispiels des erfindungsgemässen leistungsverzweigten Achsantriebs, und
- Fig. 4: eine schematische Darstellung eines dritten Ausführungsbeispiels des erfindungsgemässen leistungsverzweigten Achsantriebs, und
- Fig. 5: eine schematische Darstellung eines vierten Ausführungsbeispiels des erfindungsgemässen leistungsverzweigten Achsantriebs, und
- Fig. 6: eine detaillierte schematische Darstellung eines fünften Ausführungsbeispiels des erfindungsgemässen leistungsverzweigten Achsantriebs, und
- Fig. 7: eine detaillierte schematische Darstellung eines sechsten Ausführungsbeispiels des erfindungsgemässen leistungsverzweigten Achsantriebs, und
- Fig. 8: eine schematische Darstellung des Leistungsflusses im "Voll-Elektrisch" Betriebsmodus des erfindungsgemässen leistungsverzweigten Achsantriebs, und
- Fig. 9: eine schematische Darstellung des Leistungsflusses im "Parkbremse" Betriebsmodus des erfindungsgemässen leistungsverzweigten Achsantriebs, und
- Fig. 10: eine schematische Darstellung des Leistungsflusses im "Fahrzeugachsen-Bremse" Betriebsmodus des erfindungsgemässen leistungsverzweigten Achsantriebs, und.
- Fig. 11: eine detaillierte schematische Darstellung eines siebten Ausführungsbeispiels des erfindungsgemässen leistungsverzweigten Achsantriebs..

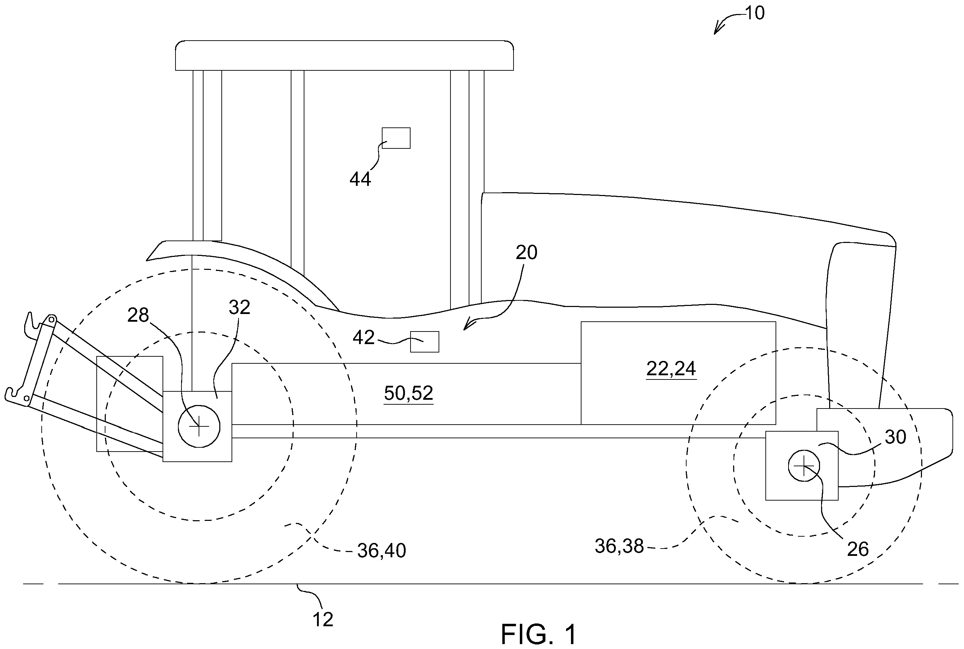

Figur 1 zeigt eine schematische Darstellung eines ersten Ausführungsbeispiels eines erfindungsgemässen landwirtschaftlichen Fahrzeugs 10, hier insbesondere eines Traktors oder Schleppers, mit einem ersten Ausführungsbeispiel eines erfindungsgemässen leistungsverzweigten Achsantrieb 20. Das landwirtschaftliche Fahrzeug 10 umfasst den leistungsverzweigten Achsantrieb 20. Der leistungsverzweigte Achsantrieb 20 umfasst ein Hauptantriebselement 22, ein Hauptgetriebe 24, eine erste Fahrzeugachse 26 und eine zweite Fahrzeugachse 28. Das Hauptantriebselement 22 kann als Verbrennungskraftmaschine oder Elektromotor ausgeführt sein kann, insbesondere als ein Verbrennungsmotor ausgeführt sein. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Der leistungsverzweigte Achsantrieb 20 kann ausserdem ein erstes Differential 30, also insbesondere ein Vorderachsdifferential, umfassen. Die erste Fahrzeugachse 26 kann mit dem ersten Differential 30 verbunden sein, insbesondere antreibbar verbunden sein. Der leistungsverzweigte Achsantrieb 20 und/oder das landwirtschaftliche Fahrzeug 10 kann ausserdem ein zweites Differential 32, also insbesondere ein Hinterachsdifferential, umfassen. Die zweite Fahrzeugachse 28 kann mit dem zweiten Differential 32 verbunden sein, insbesondere antreibbar verbunden sein. Das erste und zweite Differential 30, 32 sind optional vorgesehen.

Mit dem Hauptgetriebe 24 kann eine Drehbewegung und/oder Kraft und/oder ein Drehmoment des Hauptantriebselements 22 mit unterschiedlichen Gangstufen auf die erste und/oder zweite Fahrzeugachse 26, 28 übertragbar sein. Die erste und/oder zweite Fahrzeugachse 26, 28 wandeln eine Drehbewegung und/oder Kraft und/oder ein Drehmoment des Hauptantriebselements 22 in eine Drehbewegung und/oder Kraft und/oder ein Drehmoment eines oder mehrerer Bodeneingriffsmittel 36 und somit in einen Vorschub des Fahrzeugs 10 um. Das Fahrzeug 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich das Fahrzeug 10 auf dem Untergrund 12 abstützt. Das Fahrzeug 10 kann ausserdem ein Fahrgestell (nicht dargestellt) aufweisen, wobei das Fahrgestell insbesondere von den an der ersten und/oder zweiten Fahrzeugachse 28, 30 aufgehängten Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Rädern 40 sein. Alternativ können die Bodeneingriffsmittel 36 auch als Raupen ausgebildet und angeordnet sein.

Der leistungsverzweigte Achsantrieb 20 und/oder das Fahrzeug 10 können ausserdem eine Steuerungsvorrichtung 42 umfassen. Die Steuerungsvorrichtung 42 kann unmittelbar mit einer in einer Kabine des Fahrzeugs angeordneten Ein- und Ausgabeeinheit 44 Verbindung stehen, durch welche von einer Bedienperson eingegebene Daten an die Steuerungsvorrichtung 42 übertragen oder von dieser empfangen und ausgegeben werden können.

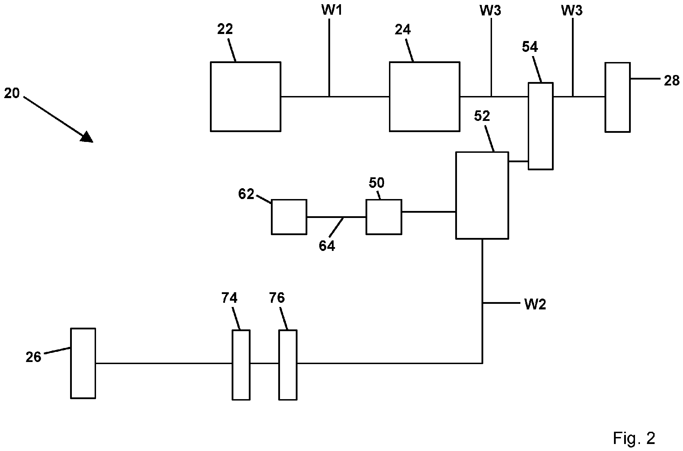

Figur 2 zeigt eine schematische Darstellung eines ersten, nicht erfindungsgemäßen Ausführungsbeispiels eines beispielhaften leistungsverzweigten Achsantriebs 20. Der in Figur 2 gezeigte Achsantrieb 20 entspricht im Wesentlichen dem in Figur 1 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 2 dargestellt, umfassen. Der leistungsverzweigte Achsantrieb 20 für ein landwirtschaftliches Fahrzeug 10 umfasst ein erstes Zusatzantriebselement 50, die erste Fahrzeugachse 26, die zweite Fahrzeugachse 28 und das Hauptantriebselement 22 zur Bereitstellung einer Drehbewegung und/oder einer Kraft und/oder eines Drehmoments, welches mit einer ersten Welle W1 auf das Hauptgetriebe 24 übertragbar ist. Das Hauptgetriebe 24 ist also über die oder mit der ersten Welle W1 mit dem Hauptantriebselement 22 verbunden, insbesondere antreibbar verbunden. Die zweiten Fahrzeugachse 28 ist mit dem Hauptgetriebe 24 verbunden, insbesondere antreibbar verbunden. Dabei ist die zweite Fahrzeugachse 28 mit der Drehbewegung und/oder der Kraft und/oder dem Drehmoment des Hauptantriebselements 22 wenigstens über das Hauptgetriebe 24 antreibbar. Im Speziellen ist die zweiten Fahrzeugachse 28 über eine oder mit einer dritte Welle W3 mit dem Hauptgetriebe 24 verbunden, insbesondere antreibbar verbunden. Mit anderen Worten, durch das Hauptantriebselement 22 ist also eine Drehbewegung und/oder eine Kraft und/oder ein Drehmoment erzeugbar, welches über die erste Welle W1 in das Hauptgetriebe 24 und vom Hauptgetriebe 24 in die oder an die zweite Fahrzeugachse 28 einleitbar oder übertragbar ist. Der leistungsverzweigte Achsantrieb 20 umfasst weiter ein Leistungsverzweigungsgetriebe 52. Das Leistungsverzweigungsgetriebe 52 ist über einen oder mit einem ersten Radsatz 54 mit der dritten Welle W3 verbunden, insbesondere antreibbar verbunden. Mit dem ersten Radsatz 54 kann also eine Drehbewegung und/oder ein Drehmoment vom Hauptantriebselement 22 an das Hauptgetriebe 24 an die dritte Welle W3 an oder in das Leistungsverzweigungsgetriebe 52 übertragen oder eingeleitet werden. Ausserdem ist die erste Fahrzeugachse 26 über eine oder mit einer zweiten Welle W2 mit dem das Leistungsverzweigungsgetriebe 52 verbunden, insbesondere antreibbar verbunden. Das erste Zusatzantriebselement 50 ist mit dem Leistungsverzweigungsgetriebe 52 verbindbar, bevorzugt lösbar verbindbar, besonders bevorzugt lösbar drehfest und/oder lösbar antreibbar verbindbar. Darüber hinaus kann das erste Zusatzantriebselement 50 generatorisch oder motorisch betrieben werden.

Der leistungsverzweigte Achsantrieb 20 kann auch ein Speicherelement 62 umfassen. Das Speicherelement 62 ist dabei optional vorgesehen. Das erste Zusatzantriebselement 50 kann über eine Verbindungsleitung 64 mit dem Speicherelement 62 leistungselektronisch verbunden sein. Mit dem leistungsverzweigten Achsantrieb 20, insbesondere auch dem Fahrzeug 10, können einer oder mehrere Betriebsmodi realisiert werden.

In einem Fahrbetrieb oder Schubbetrieb des Fahrzeugs 10 und/oder des leistungsverzweigten Achsantriebs 20 erzeugt das Hauptantriebselement 22 eine Drehbewegung und/oder eine Kraft und/oder ein Drehmoment, welche durch die erste Welle W1 in das Hauptgetriebe 24 eingeleitet wird. Die in das Hauptgetriebe 24 eingeleitete Drehbewegung und/oder eine Kraft und/oder ein Drehmoment erfährt in dem Hauptgetriebe 24 eine Übersetzung, soweit eine Gangstufe beziehungsweise eine Fahrstufe eingelegt ist. Der Ort, an dem eine Drehbewegung und/oder eine Kraft und/oder ein Drehmoment in das Hauptgetriebe 24 eingeleitet wird, wird als Getriebeeingang eingezeichnet, wobei der Ort, an dem unter Berücksichtigung des Übersetzungsverhältnisses eine resultierende Drehbewegung und/oder eine resultierende Kraft und/oder ein resultierendes Drehmoment anliegt, wird als Getriebeausgang bezeichnet. In dem in Fig. 2 gezeigten Beispiel sind Getriebeeingang und Getriebeausgang des Hauptgetriebes 24 einander gegenüberliegend angeordnet. Die bei eingelegter Gangstufe beziehungsweise Fahrstufe vorliegende Drehbewegung und/oder die vorliegende Kraft und/oder das vorliegende Drehmoment am Getriebeausgang des Hauptgetriebes 24 wird über die dritte Welle W3 in die zweite Fahrzeugachse 28 eingeleitet. Darüber hinaus wird die Drehbewegung und/oder die Kraft und/oder das Drehmoment des Hauptantriebselements 22 über das Hauptgetriebe 24 von der zweiten Welle W2 über den ersten Radsatz 54 in das Leistungsverzweigungsgetriebe 52 eingeleitet oder übertragen.

Auf oder an der zweiten Welle W2 sind ein erstes Schaltelement 74 und eine erste Bremse 76 angeordnet. Das erste Schaltelement 74 und die erste Bremse 76 sind zwischen dem Leistungsverzweigungsgetriebe 52 und der ersten Fahrzeugachse 26 angeordnet sein. Das erste Schaltelement 74 ist dabei zwischen der ersten Bremse 76 und der ersten Fahrzeugachse 26 angeordnet. Das Leistungsverzweigungsgetriebe 52 ist über das erste oder mit dem ersten Schaltelement 74 mit der ersten Fahrzeugachse 26, und insbesondere dem ersten Differential 30, verbindbar, bevorzugt lösbar verbindbar, besonders bevorzugt lösbar drehfest und/oder lösbar antreibbar verbindbar. Die erste Bremse 76 ist zwischen dem ersten Schaltelement 74 und dem Leistungsverzweigungsgetriebe 52 angeordnet. Die erste Bremse 76 ist auf der zweiten Welle W2 angeordnet. Die zweite Welle W2 ist mit der ersten Bremse 76 lösbar, beispielsweise mit einem Getriebegehäuse oder einem Rahmen, lösbar gegen Drehung haltbar. Hierdurch kann die zweite Welle W2 in Bezug auf eine Drehbewegung gehalten oder gehemmt werden. Mit der ersten Bremse 76 und dem ersten Schaltelement 74 können mit dem leistungsverzweigten Achsantrieb die oben beschriebenen Betriebsmodi, der "Voll-Elektrisch" Betriebsmodus, der "Parkbremse" Betriebsmodus und der "Fahrzeugachsen-Bremse" Betriebsmodus realisiert werden. Das erste Schaltelement 74 ist als eine erste Kupplung ausgebildet. Das erste Schaltelement 74 kann auf einer Seite drehfest mit der zweiten Welle W2 verbunden sein und auf einer anderen Seite mit einem anderen Teil der zweiten Welle W2 und somit mit dem Leistungsverzweigungsgetriebe 52 verbindbar sein. Die erste Bremse 76 kann auf einer Seite mit der zweiten Welle W2 verbunden sein und auf einer anderen Seite beispielsweise mit dem Getriebegehäuse oder Rahmen verbunden sein. Hierdurch kann die zweite Welle W2 in Bezug auf eine Drehbewegung gehemmt und/oder gehalten werden.

In einem "Generator" Betriebsmodus kann zum Laden des Speicherelements 62 das erste Zusatzantriebselement 50, insbesondere im Fahr- oder Schubbetrieb, generatorisch betrieben werden. Im generatorischen Betrieb des ersten Zusatzantriebselements 50 wird die vom Hauptantriebselement 22 in das Leistungsverzweigungsgetriebe 52 eingeleitet Drehbewegung und/oder Kraft und/oder das Drehmoment in oder an das erste Zusatzantriebselement 50 eingeleitet oder übertragen und mit dem ersten Zusatzantriebselement elektrische Energie erzeugt und Speicherelement 62 zugeführt. Ebenso kann ein "Vorlauf" Betriebsmodus realisiert werden, indem das erste Zusatzantriebselement 50 motorisch betrieben wird. Dadurch kann eine zusätzliche Drehbewegung und/oder eine zusätzliche Kraft und/oder ein zusätzliches Drehmoment des ersten Zusatzantriebselement 50 an das Leistungsverzweigungsgetriebe 52 übertragen werden. Die an das Leistungsverzweigungsgetriebe 52 übertragene Drehbewegung und/oder Kraft und/oder das übertragene Drehmoment des Hauptantriebselements 22 und die an das Leistungsverzweigungsgetriebe 52 übertragene Drehbewegung und/oder Kraft und/oder das übertragene Drehmoment des ersten Zusatzantriebselements 50 können mit dem Leistungsverzweigungsgetriebe 52 überlagert werden und eine resultierende Drehbewegung und/oder eine resultierende Kraft und/oder ein resultierendes Drehmoment auf die erste Fahrzeugachse 26 übertragbar sein.

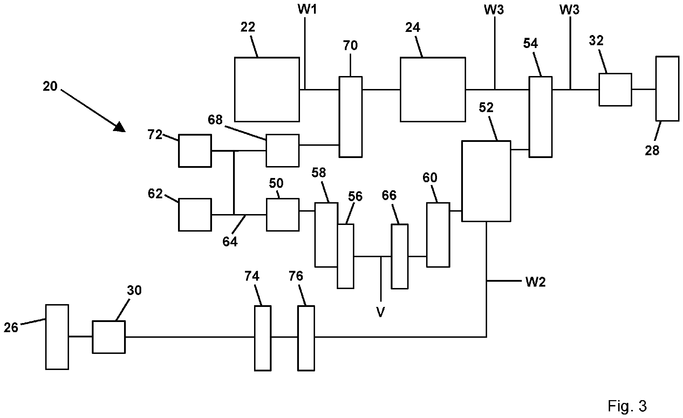

Figur 3 zeigt eine schematische Darstellung eines zweiten, nunmehr erfindungsgemäßen Ausführungsbeispiels des leistungsverzweigten Achsantriebs 20. Der in Figur 3 gezeigte Achsantrieb 20 entspricht im Wesentlichen dem in den Figuren 1 bis 2 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 3 dargestellt, umfassen. Das erste Zusatzantriebselement 50 ist über ein zweites oder mit einem zweiten Schaltelement 56 mit dem Leistungsverzweigungsgetriebe 52 verbindbar, bevorzugt lösbar verbindbar, besonders bevorzugt lösbar drehfest und/oder lösbar antreibbar verbindbar. Im Folgenden ist unter einem nicht betätigten zweiten Schaltelement 56 ein geöffnetes zweites Schaltelement 56 zu verstehen. Das bedeutet, dass keine Drehbewegung und/oder keine Kraft und/oder kein Drehmoment des ersten Zusatzantriebselements 50 mit dem oder über das zweite Schaltelement 56 an oder in das Leistungsverzweigungsgetriebe 52 und/oder umgekehrt übertragbar oder einleitbar ist. Bei betätigtem, insbesondere geschlossenem zweiten Schaltelement 56, kann eine Drehbewegung und/oder eine Kraft und/oder ein Drehmoment des ersten Zusatzantriebselements 50 mit dem oder über das zweite Schaltelement 56 an oder in das Leistungsverzweigungsgetriebe 52 übertragbar oder einleitbar sein, und/oder umgekehrt vom Leistungsverzweigungsgetriebe 52 in das erste Zusatzantriebselements übertragbar sein. Im "Generator" Betriebsmodus kann in das erste Zusatzantriebselements 50 mit betätigtem, besonders bevorzugt mit einem geschlossenem zweitem Schaltelement 56, die vom Hauptantriebselement 22 in das Leistungsverzweigungsgetriebe 52 eingeleitet Drehbewegung und/oder Kraft und/oder das Drehmoment in oder an das erste Zusatzantriebselement 50 eingeleitet oder übertragen und mit dem ersten Zusatzantriebselement elektrische Energie erzeugt und Speicherelement 62 zugeführt werden. Ebenso kann der "Vorlauf" Betriebsmodus realisiert werden, indem die zusätzliche Drehbewegung und/oder zusätzliche Kraft und/oder das zusätzliche Drehmoment des ersten Zusatzantriebselement 50 über das geschlossen zweite Schaltelement 56 an das Leistungsverzweigungsgetriebe 52 übertragen wird. Vorteilhafterweise kann so ein Vorlauf der ersten Fahrzeugachse 26 einstellbar und/oder verstellbar, insbesondere steuerbar und/oder regelbar sein.

Der leistungsverzweigte Achsantrieb 20 umfasst zusätzlich eine Vorgelegewelle V. Das erste Zusatzantriebselement 50 ist über das zweite oder mit dem zweiten Schaltelement 56 mit der Vorgelegewelle V verbindbar, bevorzugt antreibbar verbindbar. Ebenso ist das Leistungsverzweigungsgetriebe 52 mit der Vorgelegewelle V verbunden, insbesondere antreibbar verbunden. Ausserdem umfasst der leistungsverzweigte Achsantrieb 20 einen zweiten Radsatz 58. Das zweite Schaltelement 56 ist dabei über den oder mit dem zweiten Radsatz 58 mit dem ersten Zusatzantriebselement 50 verbunden, bevorzugt antreibbar verbunden. Die Vorgelegewelle V ist mit dem zweiten oder über das zweite Schaltelement 56 mit dem zweiten Radsatz 58 verbindbar, bevorzugt antreibbar verbindbar. Das zweite Schaltelement 56 ist dabei derart betätigbar, insbesondere schliessbar, dass der zweite Radsatz 58 über das zweite oder mit dem zweiten Schaltelement 56 mit der Vorgelegewelle V verbunden ist, bevorzugt antreibbar verbunden ist. Mit anderen Worten, das zweite Schaltelement 56 ist derart betätigbar, insbesondere schliessbar, dass eine Drehbewegung und/oder eine Kraft und/oder ein Drehmoment des ersten Zusatzantriebselements 50 an oder in den zweiten Radsatz 58 und vom zweiten Radsatz 58 an oder in das zweite Schaltelement 56 und vom zweiten Schaltelement 56 weiter an oder in die Vorgelegewelle V übertragen oder eingeleitet werden kann. Ebenso ist das zweite Schaltelement 56 derart nicht betätigbar, insbesondere geöffnet, dass keine Drehbewegung und/oder keine Kraft und/oder kein Drehmoment des ersten Zusatzantriebselements 50 an oder in die Vorgelegewelle V übertragen oder eingeleitet werden kann. Der leistungsverzweigte Achsantrieb 20 umfasst ausserdem einen dritten Radsatz 60. Das Leistungsverzweigungsgetriebe 52 ist über den oder mit dem dritten Radsatz 60 mit der Vorgelegewelle V verbunden, insbesondere antreibbar verbunden sein. Mit dem dritten Radsatz 60 kann eine Drehbewegung und/oder eine Kraft und/oder ein Drehmoment von der Vorgelegewelle V an oder in das Leistungsverzweigungsgetriebe 52 übertragen oder eingeleitet werden. Dadurch kann eine Drehbewegung und/oder eine Kraft und/oder ein Drehmoment vom ersten Zusatzantriebselement 50 über den zweiten Radsatz 58 an das zweite Schaltelement 56 und vom zweiten Schaltelement 56 an die Vorgelegewelle V und von der Vorgelegewelle V über den dritten oder mit dem dritten Radsatz 60 an das Leistungsverzweigungsgetriebe 52 übertragbar sein. Die Drehbewegung und/oder Kraft und/oder das Drehmoment kann dann beispielsweise vom Leistungsverzweigungsgetriebe 52, insbesondere über das erste Differential 30, auf die erste Fahrzeugachse 26 übertragbar sein. Im "Generator" Betriebsmodus, also im Fahr- oder Schubbetrieb und generatorischen Betrieb des ersten Zusatzantriebselements 50, wird dann, bei geschlossenem zweitem Schaltelement 56, die vom Hauptantriebselement 22 in das Leistungsverzweigungsgetriebe 52 eingeleitet Drehbewegung und/oder Kraft und/oder das Drehmoment vom Leistungsverzweigungsgetriebe 52 über den dritten Radsatz 60 in die Vorgelegewelle V und von der Vorgelegewelle V in das geschlossene zweite Schaltelement 56 und den zweiten Radsatz 58 weiter in das erste Zusatzantriebselement 50 eingeleitet oder übertragen und mit dem ersten Zusatzantriebselement 50 elektrische Energie erzeugt. Im "Vorlauf" Betriebsmodus, also im Fahr- oder Schubbetrieb und motorischen Betrieb des ersten Zusatzantriebselements 50, wird eine zusätzliche Drehbewegung und/oder eine zusätzliche Kraft und/oder ein zusätzliches Drehmoment des ersten Zusatzantriebselement 50 vom ersten Zusatzantriebselement 50 über den zweiten Radsatz 58 und das geschlossene zweite Schaltelement 56 an die Vorgelegewelle V und von der Vorgelegewelle V über den dritten Radsatz 60 an das Leistungsverzweigungsgetriebe 52 übertragen und vom Leistungsverzweigungsgetriebe 52 mit der Drehbewegung und/oder der Kraft und/oder dem Drehmoment des Hauptantriebselements 22 überlagert. Die resultierende Drehbewegung und/oder Kraft und/oder das resultierende Drehmoment werden vom Leistungsverzweigungsgetriebe 52 mit der zweiten Welle W2 an die erste Fahrzeugachse 26 übertragen. Vorteilhafterweise kann so das erste Zusatzantriebselement 50 auf das Leistungsverzweigungsgetriebe 52 einwirken, wodurch ein Vorlauf der ersten Fahrzeugachse 26 regelbar ist.

Der leistungsverzweigte Achsantrieb 20 umfasst zusätzlich eine zweite Bremse 66. Die zweite Bremse 66 ist zwischen dem ersten Zusatzantriebselement 50 und dem Leistungsverzweigungsgetriebe 52 angeordnet. Die zweite Bremse 66 ist mit der Vorgelegewelle V drehfest verbunden. Die Vorgelegewelle V ist mit der zweiten Bremse 66 lösbar gegen Drehung haltbar.

Der leistungsverzweigte Achsantrieb 20 kann optional ein zweites Zusatzantriebselement 68 umfassen. Das zweite Zusatzantriebselement 68 ist mit dem Hauptantriebselement 22 über oder mit der ersten Welle W1 verbunden, bevorzugt antreibbar verbunden. Das durch das Hauptantriebselement 22 erzeugbare Drehmoment und/oder die erzeugbare Kraft und/oder die erzeugbare Rotationsbewegung ist über die Übersetzungsstufe 70, insbesondere einen vierten Radsatz, in oder an das zweite Zusatzantriebselement einleitbar oder übertragbar sein. Das zweite Zusatzantriebselement 68 ist über die Verbindungsleitung 64 mit dem Speicherelement 62 und dem ersten Zusatzantriebselement 50 leistungselektronisch verbunden. Das zweite Zusatzantriebselement 68 ist ausserdem über die Verbindungsleitung 64 mit einem Nebenabtrieb 72 leistungselektronisch verbunden. Der Nebenabtrieb 72 ist dabei, ebenso wie das Speicherelement 62, optional vorgesehen. Dies bedeutet, dass nicht zwingend ein Nebenabtrieb 72 vorgesehen sein muss. Darüber hinaus sind jedoch auch Ausführungen mit mehr als einem Nebenabtrieb 72 denkbar. Wie bereits erwähnt, kann erzeugte elektrische Energie beziehungsweise gespeicherte elektrische Energie dem Speicherelement 62 zugeführt oder entnommen oder den Verbrauchern, beispielsweise dem ersten Zusatzantriebselement 50, dem Nebenabtrieb72 und/oder dem zweiten Zusatzelement 68 durch die Verbindungsleitung 64 zugeführt werden kann. Die mit dem Hauptantriebselement 22 erzeugte Drehbewegung beziehungsweise die erzeugte Kraft und/oder das erzeugte Drehmoment wird, insbesondere mit der Übersetzungsstufe 70, bevorzugt dem vierten Radsatz und/oder der ersten Welle W1 in das zweite Zusatzantriebselement 68 und/oder das Hauptgetriebe 24 eingeleitet. Das zweite Zusatzantriebselement 68 kann in diesem Fall generatorisch betrieben werden, das heißt, dass die, insbesondere durch die Übersetzungsstufe 70, bevorzugt den vierten Radsatz und/oder die erste Welle W1, eingeleitete Energie in Form der Drehbewegung und/oder der Kraft und/oder des Drehmoments in elektrische Energie umgewandelt wird. Diese elektrische Energie kann zum Betreiben des (elektrischen) Nebenabtriebs 72 verwendet werden und/oder elektrische Energie kann in dem optionalen Speicherelement 62 gespeichert werden und/oder das erste Zusatzantriebselement 50 kann motorisch betrieben werden, um den Vorlauf der ersten Fahrzeugachse 26 zu erhöhen. Soweit das zweite Zusatzantriebselement 68 generatorisch betrieben wird, wird elektrische Energie erzeugt. Diese kann zum Betreiben des Nebenabtriebs 72 verwendet und/oder in dem Speicherelement 62 gespeichert werden. Zum Laden des Speicherelements 62 können beispielsweise aber auch das erste Zusatzantriebselement 50 und/oder das zweite Zusatzantriebselement 68, insbesondere im Fahr- oder Schubbetrieb, generatorisch betrieben werden. Dazu kann mit dem Hauptantriebselement 22 eine Drehbewegung und/oder eine Kraft und/oder ein Drehmoment in das zweite Zusatzantriebselement 68 und über das Hauptgetriebe 24 in das Leistungsverzweigungsgetriebe 52 in das erste Zusatzantriebselement 50 eingeleitet oder übertragen werden. Das zweite Zusatzantriebselement 68 kann zusätzlich zu der durch das Hauptantriebselement 22 eingeleiteten Drehbewegung und/oder Kraft und/oder Drehmoment ebenfalls eine Drehbewegung und/oder Kraft und/oder Drehmoment einleiten, insbesondere über die Übersetzungsstufe 70, bevorzugt den vierten Radsatz, in die erste Welle W1 einleiten. Dazu kann das zweite Zusatzantriebselement 68 motorisch betrieben werden. Somit kann beispielsweise kurzzeitig eine Erhöhung der Antriebsleistung erfolgen, soweit dies durch den jeweiligen Fahrzustand erforderlich ist.

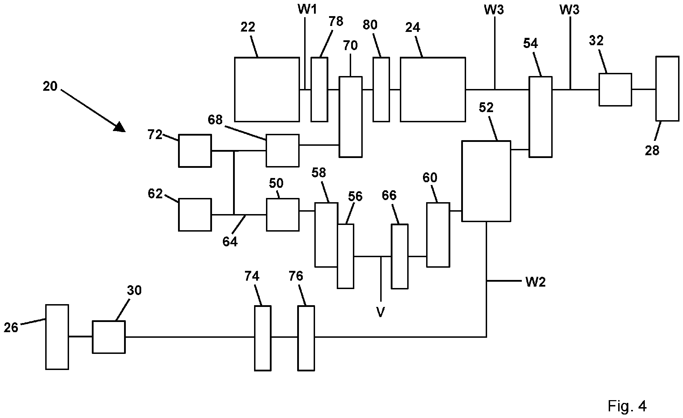

Figur 4 zeigt eine schematische Darstellung eines dritten Ausführungsbeispiels des erfindungsgemässen leistungsverzweigten Achsantriebs 20. Der in Figur 4 gezeigte Achsantrieb 20 entspricht im Wesentlichen dem in den Figuren 1 bis 3 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 4 dargestellt, umfassen. Zwischen dem Hauptantriebselement 22 und dem zweiten Zusatzantriebselement 68 und/oder dem Hauptantriebselement 22 und dem Hauptgetriebe 24 ist ein drittes Schaltelement 78 angeordnet. Ebenso ist zwischen dem Hauptgetriebe 24 und dem Hauptantriebselement 22 und/oder dem Hauptgetriebe 24 und dem zweiten Zusatzantriebselement 68 ein viertes Schaltelement 80 angeordnet sein. Bei geöffnetem drittem Schaltelement 78 ist das Hauptantriebselement 22 von dem leistungsverzweigten Achsantrieb 20 entkoppelt. Es kann also vom Hauptantriebselement 22 keine Drehbewegung und/oder Kraft und/oder kein Drehmoment in oder an das zweite Zusatzantriebselement 68 und/oder das Hauptgetriebe 24 eingeleitet oder übertragen werden. Ebenso kann auch umgekehrt keine Drehbewegung und/oder Kraft und/oder kein Drehmoment in oder an das Hauptantriebselement 22 eingeleitet oder übertragen werden. In diesem Fall wäre demnach lediglich ein rein elektrischer Fahrzustand durch das motorische Betreiben des ersten Zusatzantriebselements 50 und/oder des zweiten Zusatzantriebselements 68 realisierbar. Bei geschlossenem drittem Schaltelement 78 ist das Hauptantriebselement 22 mit dem leistungsverzweigten Achsantrieb 20 verbunden. Es kann also vom Hauptantriebselement 22 eine Drehbewegung und/oder eine Kraft und/oder ein Drehmoment in oder an das zweite Zusatzantriebselement 68 und/oder das Hauptgetriebe 24 eingeleitet oder übertragen werden. Ebenso kann auch umgekehrt eine Drehbewegung und/oder eine Kraft und/oder ein Drehmoment in oder an das Hauptantriebselement 22 eingeleitet oder übertragen werden. Bei geöffnetem viertem Schaltelement 80 ist also das Hauptgetriebe 24 vom Hauptantriebselement 22 und/oder dem zweite Zusatzantriebselement 68 entkoppelt. Dies bedeutet, dass ein mechanisch eingeleiteter Vortrieb über das Hauptgetriebe 24 nicht darstellbar ist. Es kann also vom Hauptgetriebe 24 keine Drehbewegung und/oder Kraft und/oder kein Drehmoment in oder an den leistungsverzweigten Achsantrieb eingeleitet oder übertragen werden. Darüber hinaus kann bei ausgeschaltetem Hauptantriebselement 22 und geöffnetem vierten Schaltelement 80 und geschlossenem dritten Schaltelement 78 das Hauptantriebselement 22 durch motorischen Betrieb des zweiten Zusatzantriebselements 68 gestartet werden. Bei geschlossenem viertem Schaltelement 80 ist also das Hauptgetriebe 24 mit dem Hauptantriebselement 22 und/oder dem zweite Zusatzantriebselement 68 verbunden, insbesondere antreibbar verbunden. Es kann also vom Hauptgetriebe 24 eine Drehbewegung und/oder eine Kraft und/oder ein Drehmoment in oder an den leistungsverzweigten Achsantrieb eingeleitet oder übertragen werden.

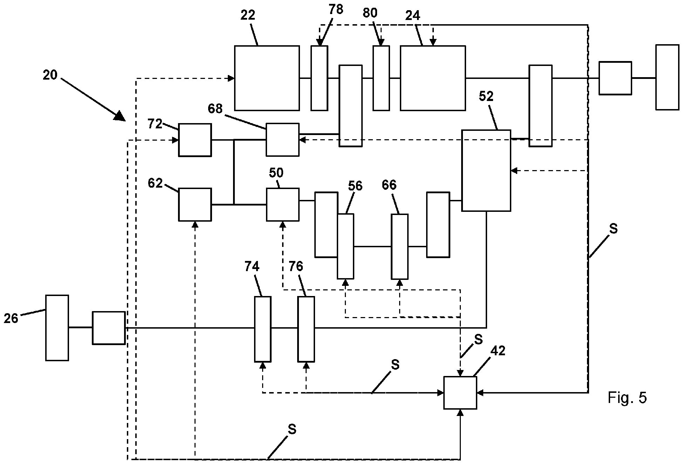

Figur 5 zeigt eine schematische Darstellung eines vierten Ausführungsbeispiels des erfindungsgemässen leistungsverzweigten Achsantriebs 20. Der in Figur 5 gezeigte Achsantrieb 20 entspricht im Wesentlichen dem in den Figuren 1 bis 4 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 5 dargestellt, umfassen. Dem leistungsverzweigten Achsantrieb 20 ist zumindest eine Steuerungsvorrichtung 42 zugeordnet, insbesondere kann der leistungsverzweigte Achsantrieb 20 die Steuerungsvorrichtung 42 umfassen. Die Steuerungsvorrichtung 42 ist über mehrere Steuerleitungen S, bevorzugt über bidirektionale Steuerleitungen, mit dem ersten und/oder zweiten Zusatzantriebselement 50, 68 und/oder dem Nebenabtrieb 72 und/oder dem Speicherelement 62 und/oder dem ersten und/oder zweiten und/oder dritten und/oder vierten Schaltelement 74, 56, 78, 80 und/oder dem Hauptantriebselement 22 und/oder dem Hauptgetriebe 24 und/oder dem Leistungsverzweigungsgetriebe 52 und/oder einer ersten und/oder zweiten Bremse 66, 76 zur Steuerung und/oder Regelung und/oder deren Ansteuerung verbunden, und ist insbesondere mit diesen signalverbunden und/oder signalübertragend und/oder datenleitend verbunden. Die Steuerungsvorrichtung 42 ist derart ausgebildet, dass der leistungsverzweigte Achsantrieb 20, insbesondere die oben genannten Komponenten des leistungsverzweigten Achsantriebs 20, in Abhängigkeit von einem Betriebsmodus des leistungsverzweigten Achsantrieb 20 und/oder Fahrzeugs 10 ansteuerbar sind.

Insbesondere die oben genannten Betriebsmodi "Generator" und/oder "Vorlauf" und/oder "Voll-Elektrisch" und/oder "Parkbremse" und/oder "Fahrzeugachsen-Bremse" können mit der Steuerungsvorrichtung 42 ansteuerbar sein.

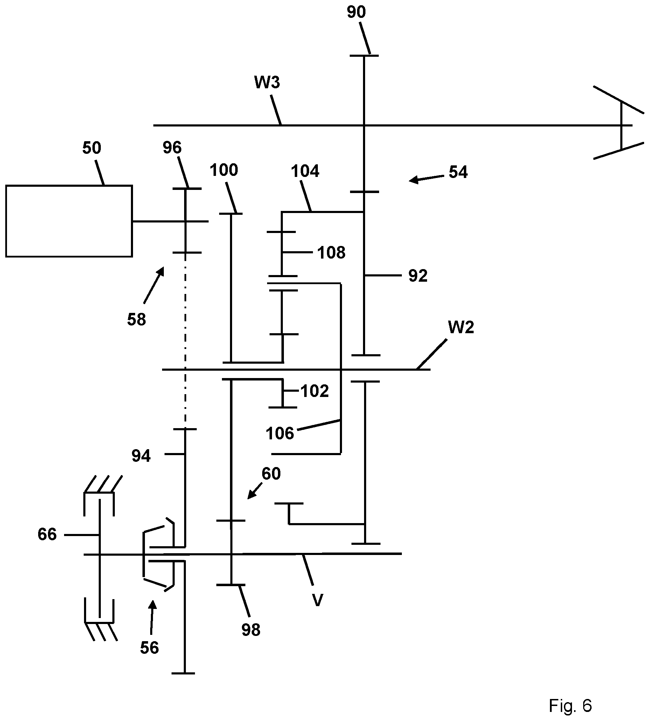

Figur 6 zeigt eine detaillierte schematische Darstellung eines fünften Ausführungsbeispiels des erfindungsgemässen leistungsverzweigten Achsantriebs 20, insbesondere des Leistungsverzweigungsgetriebes 52 und des ersten Zusatzantriebselement 50. Der in Figur 6 gezeigte leistungsverzweigte Achsantrieb 20 entspricht im Wesentlichen dem in den Figuren 1 bis 5 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 6 dargestellt, umfassen. Der erste Radsatz 54 umfasst ein erstes Zahnradpaar, insbesondere ein erstes und ein zweites Festrad 90, 92. Das erste Festrad 90 ist mit der dritten Welle W3 und das zweite Festrad 92 mit dem Leistungsverzweigungsgetriebe 52 verbunden, bevorzugt drehfest verbunden. Das erste Festrad 90 kämmt mit dem zweiten Festrad 92. Der zweite Radsatz 58 umfasst ein zweites Zahnradpaar, insbesondere ein erstes Schaltrad 94 und ein drittes Festrad 96. Das dritte Festrad 96 ist mit dem ersten Zusatzantriebselement 50, insbesondere einer Abtriebswelle des ersten Zusatzantriebselements 50, verbunden, bevorzugt antreibbar verbunden, besonders bevorzugt drehfest und/oder antreibbar verbunden sein. Das erste Schaltrad 94 ist drehbar auf der Vorgelegewelle V gelagert, insbesondere frei drehbar und/oder axial verschiebbar auf der Vorgelegewelle V gelagert sein. Das erste Schaltrad 94 ist mit einer Seite des zweiten Schaltelements 56 verbunden, bevorzugt drehfest und/oder antreibbar verbunden sein. Das erste Schaltrad 94 kämmt mit dem dritten Festrad 96. Das zweite Schaltelement 56 ist also über das erste oder mit dem ersten Schaltrad 94 und über das dritte oder mit dem dritten Festrad 96 mit dem ersten Zusatzantriebselement 50 verbunden, bevorzugt antreibbar verbunden. Die Vorgelegewelle V wiederum ist mit dem zweiten oder über das zweite Schaltelement 56 und das erste Schaltrad 94 mit dem dritten Festrad 96 verbunden, bevorzugt antreibbar verbunden, besonders bevorzugt lösbar antreibbar verbunden. Der dritte Radsatz 60 umfasst ein drittes Zahnradpaar, insbesondere ein viertes und ein fünftes Festrad 98, 100. Das vierte Festrad 98 ist mit der Vorgelegewelle V und das fünfte Festrad 100 mit dem Leistungsverzweigungsgetriebe 52, insbesondere einem Sonnenrad 102 des Leistungsverzweigungsgetriebe 52, verbunden, bevorzugt drehfest und/oder antreibbar verbunden. Das vierte Festrad 98 kämmt mit dem fünften Festrad 100.

Das Leistungsverzweigungsgetriebe 52 ist als Planetengetriebe ausgeführt. Ein Hohlrad 104 des Leistungsverzweigungsgetriebes 52 ist über den oder mit dem ersten Radsatz 54 mit der dritten Welle W3 verbunden, insbesondere antreibbar verbunden. Das Hohlrad 104 ist mit dem zweiten Festrad 92 verbunden, bevorzugt drehfest und/oder antreibbar verbunden sein. Dadurch ist eine Kraft und/oder eine Drehbewegung und/oder ein Drehmoment vom Hauptantriebselement 22 über das Hauptgetriebe 24 an die dritte Welle W3 und weiter über den ersten Radsatz 54 an das Hohlrad 104 und somit insbesondere das Leistungsverzweigungsgetriebe 52 bzw. das Planetengetriebe übertragbar sein. Die erste Fahrzeugachse 26 ist über oder mit der zweiten Welle W2 mit einem Planetenträger 106 beziehungsweise einem Steg des Leistungsverzweigungsgetriebes 52 verbunden, insbesondere antreibbar verbunden. Der Planetenträger 106 ist mit der zweiten Welle W2 verbunden, bevorzugt drehfest und/oder antreibbar verbunden. Dadurch ist eine Kraft und/oder eine Drehbewegung und/oder ein Drehmoment vom Leistungsverzweigungsgetriebes 52 über den Planetenträger 106 auf die zweite Welle W2 und weiter, insbesondere über das erste Differential 30, an die erste Fahrzeugachse 26 übertragbar. An dem Planetenträger 106 ist ein Planetensatz, insbesondere eines oder mehrere Planetenräder 108, drehbar gelagert, die jeweils mit Sonnenrad 102 und Hohlrad 104 kämmen, sich also insbesondere in ständigem Kämmeingriff mit diesen befinden. Der Planetensatz kann insbesondere einen Satz von Planetenrädern 108 aufweisen. Der Planetensatz kann drei Planetenräder 108 umfassen. Darüber hinaus ist das Sonnenrad 102 des Leistungsverzweigungsgetriebes 52 über das fünfte Festrad 100 und das vierte Festrad 98, und insbesondere weiter über die Vorgelegewelle V und das zweite Schaltelement und den zweiten Radsatz, mit dem ersten Zusatzantriebselement verbunden, insbesondere antreibbar verbunden. Dadurch ist eine Kraft und/oder ein Drehmoment vom ersten Zusatzantriebselement über den zweiten Radsatz und das zweite Schaltelement an die Vorgelegewelle und von der Vorgelegewelle über das vierte Festrad 98 und das fünfte Festrad 100 an das Sonnenrad 102 des Leistungsverzweigungsgetriebes 52 übertragbar.

Die zweite Bremse 66 ist auf der Vorgelegewelle V angeordnet. Die zweite Bremse 66 ist mit der Vorgelegewelle V verbunden, bevorzugt mit der Vorgelegewelle V antreibbar verbunden, besonders bevorzugt mit der Vorgelegewelle V drehfest und/oder antreibbar verbunden. Wenn die zweite Bremse 66 betätigt, also insbesondere geschlossen ist, arbeitet das Leistungsverzweigungsgetriebe 52 mit einem festen Verhältnis, also vollständig mechanisch. Das Leistungsverzweigungsgetriebe 52 kann dann das Bremsmoment von der ersten Fahrzeugachse 26 auf die Fahrzeugbremse oder Hinterachsbremse (nicht gezeigt, an der zweiten Fahrzeugachse 28) übertragen.

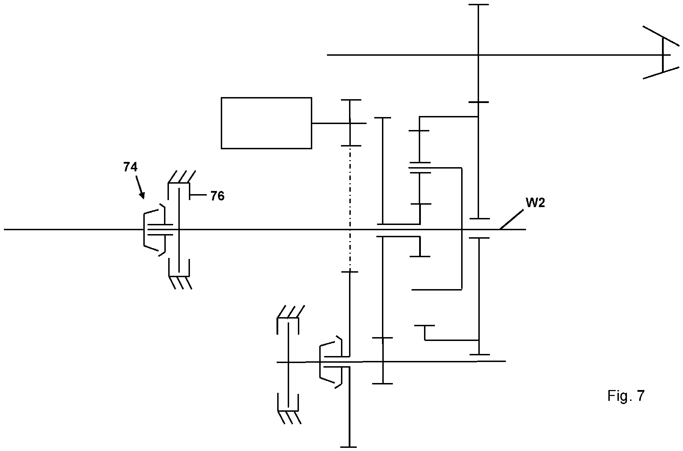

Figur 7 zeigt eine detaillierte schematische Darstellung eines sechsten Ausführungsbeispiels des erfindungsgemässen leistungsverzweigten Achsantriebs 20. Der in Figur 7 gezeigte Achsantrieb 20 entspricht im Wesentlichen dem in den Figuren 1 bis 6 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 7 dargestellt, umfassen. Das erste Schaltelement 74 und die erste Bremse 76 sind auf der zweiten Welle W2 zwischen Leistungsverzweigungsgetriebe 52 und erster Fahrzeugachse 26 angeordnet.

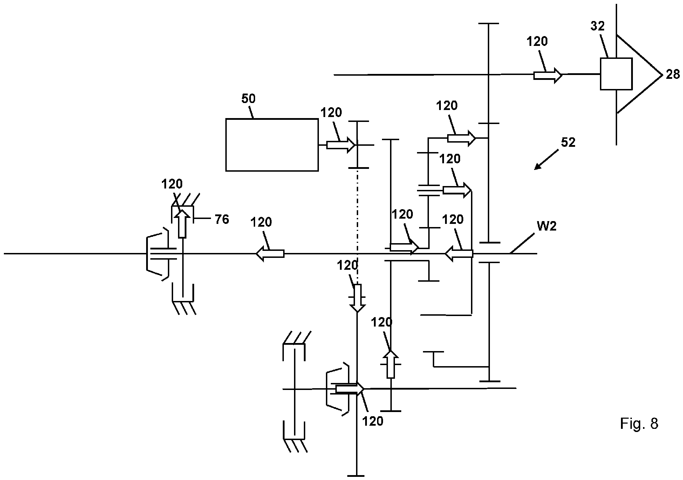

Die Figuren 8 bis 10 zeigen schematische Darstellungen des Leistungsflusses im "Voll-Elektrisch" Betriebsmodus, "Parkbremse" Betriebsmodus und "Fahrzeugachsen-Bremse" Betriebsmodus im erfindungsgemässen leistungsverzweigten Achsantriebs 20. Der in den Figur 8 bis 10 gezeigte leistungsverzweigte Achsantrieb 20 entspricht dabei im Wesentlichen dem in den Figuren 1 bis 7 gezeigten leistungsverzweigten Achsantrieb 20, sodass im Folgenden lediglich auf Details und/oder Unterschiede eingegangen wird. Die Pfeile 120 zeigen dabei die Richtung des Leistungsflusses, also die Richtung der Übertragung einer Drehbewegung und/oder einer Kraft und/oder eines Drehmoments. Die Grösse der Pfeile 120 zeigt schematisch die Grösse der übertragenen Drehbewegung und/oder Kraft und/oder des übertragenen Drehmoments an.

Figur 8 zeigt den Leistungsfluss des "Voll-Elektrisch" Betriebsmodus. Im "Voll-Elektrisch" Betriebsmodus wird ein Leistungsfluss, also eine Drehbewegung und/oder eine Kraft und/oder ein Drehmoment, vom ersten Zusatzantriebselement 50 über das Leistungsverzweigungsgetriebe 52 an die zweite Fahrzeugachse 28 übertragen und somit das landwirtschaftliche Fahrzeug 10 kontrolliert bewegt werden. An oder von der geschlossenen ersten Bremse 76 kann eine Drehbewegung und/oder eine Kraft und/oder ein Drehmoment, welche vom Leistungsverzweigungsgetriebe 52 an die zweite Welle W2, also insbesondere in Richtung der ersten Fahrzeugachse 26, übertragen wird, gehalten und/oder gehemmt und/oder abgestützt werden. Im Speziellen kann die zweite Welle W2 mit der ersten Bremse 76 in Bezug auf eine Drehbewegung der zweiten Welle W2 gehalten oder gehemmt werden. Die erste Bremse 76 sorgt somit dafür, dass eine Standübersetzung vom Sonnenrad zu Hohlrad ermöglicht wird.

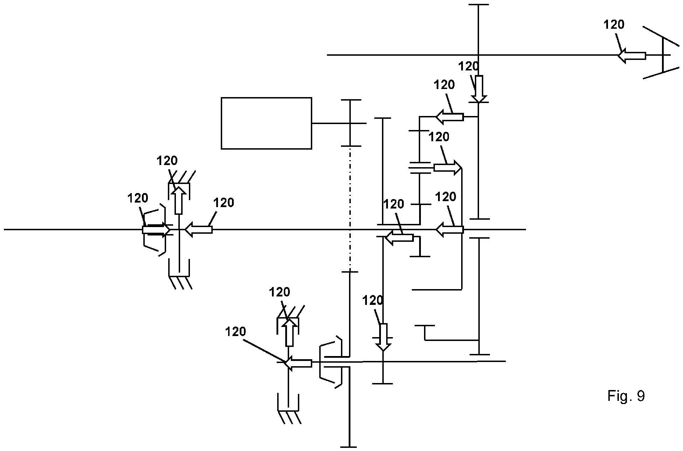

Figur 9 zeigt den Leistungsfluss des "Parkbremse" Betriebsmodus. Im "Parkbremse" Betriebsmodus wird ein Leistungsfluss, also eine Drehbewegung und/oder eine Kraft und/oder ein Drehmoment, von der ersten und/oder zweiten Fahrzeugachse 26, 28 an den leistungsverzweigten Achsantrieb 20 übertragen und abgestützt werden. Dadurch wird das Fahrzeug in seiner Position gehalten.

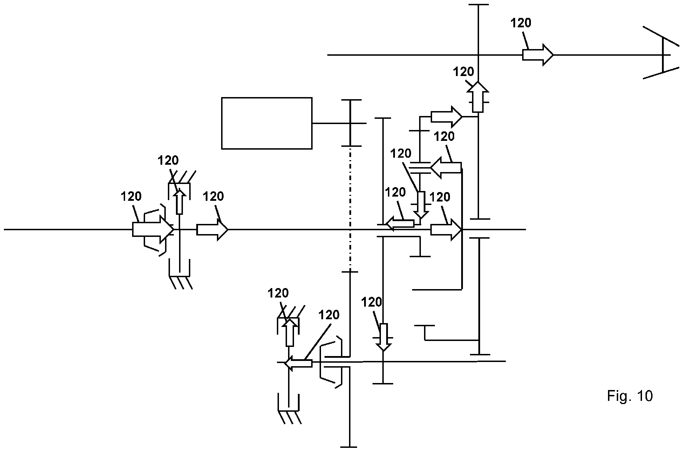

Figur 10 zeigt den Leistungsfluss des "Fahrzeugachsen-Bremse" Betriebsmodus. Im "Fahrzeugachsen-Bremse" Betriebsmodus wird ein Leistungsfluss, also eine Drehbewegung und/oder eine Kraft und/oder ein Drehmoment, von der ersten und/oder zweiten Fahrzeugachse 26, 28 an den leistungsverzweigten Achsantrieb 20 übertragen und zumindest teilweise gehemmt und/oder gehalten und zumindest teilweise an die Hinterachsbremse übertragen. Dadurch wird das Fahrzeug, insbesondere im Fahr- oder Schubbetrieb, gebremst.

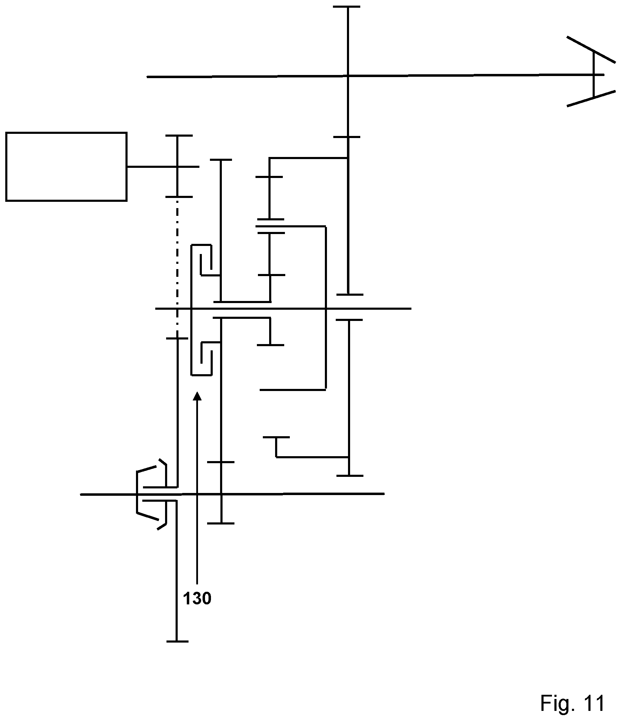

Figur 11 zeigt eine detaillierte schematische Darstellung eines siebten Ausführungsbeispiels des erfindungsgemässen leistungsverzweigten Achsantriebs 20. Der in Figur 11 gezeigte Achsantrieb 20 entspricht im Wesentlichen dem in den Figuren 1 bis 10 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 11 dargestellt, umfassen. Das Leistungsverzweigungsgetriebe 52 umfasst alternativ anstatt der zweiten Bremse 66 ein fünftes Schaltelement 130. Das fünfte Schaltelement 130 ist als fünfte Kupplung ausgebildet. Das fünfte Festrad 100 und/oder das Sonnenrad 102 sind über das geschlossene fünfte Schaltelement 130 mit der zweiten Welle W2 drehfest verbunden. Die erste und zweite Fahrzeugachse 26, 28 werden somit beide mechanisch durch das Hauptantriebselement 22 angetrieben. Im Speziellen ist die relative Geschwindigkeit des Sonnenrads 102 und der zweiten Welle W2 0 (Null) Umdrehungen pro Minute. Das führt dazu, dass Hohlrad 104 sich mit der gleichen Geschwindigkeit dreht wie das Sonnenrad 102 und die zweite Welle W2. Bei geöffnetem fünftem Schaltelement kann eine Drehzahl und/oder eine Kraft und/oder ein Drehmoment des ersten Zusatzantriebselements 50 vom fünften Festrad 100 und/oder das Sonnenrad 102 in das Leistungsverzweigungsgetriebe 52 übertragbar oder einleitbar sein.

## Patentansprüche

1. Leistungsverzweigter Achsantrieb für ein landwirtschaftliches Fahrzeug, umfassend ein erstes Zusatzantriebselement (50), eine erste Fahrzeugachse (26), eine zweite Fahrzeugachse (28) und ein Hauptantriebselement (22) zur Bereitstellung eines Drehmoments, welches mit einer ersten Welle (W1) auf ein Hauptgetriebe (24) und vom Hauptgetriebe mit einer dritten Welle (W3) an die zweite Fahrzeugachse (28) übertragbar ist, wobei das Hauptgetriebe (24) über die dritte Welle (W3) mit der zweiten Fahrzeugachse (28) verbunden ist, und mit dem Drehmoment des Hauptantriebselements (22) wenigstens die zweite Fahrzeugachse (28) über das Hauptgetriebe (24) antreibbar ist, und der leistungsverzweigte Achsantrieb (20) ein Leistungsverzweigungsgetriebe (52) aufweist, wobei das Leistungsverzweigungsgetriebe (52) über einen ersten Radsatz (54), der ein erstes und ein zweites Festrad umfasst, und über die dritte Welle mit der zweiten Fahrzeugachse (28) und dem Hauptgetriebe (24) verbunden ist und über eine zweite Welle mit der ersten Fahrzeugachse (26) verbunden ist, wobei das erste Festrad mit der dritten Welle und das zweite Festrad mit dem Leistungsverzweigungsgetriebe verbunden ist, und das erste Zusatzantriebselement (50) mit dem Leistungsverzweigungsgetriebe (52) verbindbar ist, wobei der leistungsverzweigte Achsantrieb (20) eine Vorgelegewelle (V) und ein zweites Schaltelement (56) und einen zweiten Radsatz (58) umfasst, wobei das erste Zusatzantriebselement (50) mit dem zweiten Schaltelement (56) mit der Vorgelegewelle (V) verbindbar ist, und das erste Zusatzantriebselement (50) über den zweiten Radsatz (58) mit dem zweiten Schaltelement (56) verbunden ist, und die Vorgelegewelle (V) mit dem Leistungsverzweigungsgetriebe (52) verbunden ist, **dadurch gekennzeichnet, dass**
der leistungsverzweigte Antrieb (20) einen dritten Radsatz (60) umfasst,
dass die Vorgelegewelle (V) über den dritten Radsatz (60) mit dem Leistungsverzweigungsgetriebe (52) verbunden ist, und dass auf der zweiten Welle (W2) ein erstes Schaltelement (74) und/oder eine erste Bremse (76) angeordnet ist.

2. Leistungsverzweigter Achsantrieb nach Anspruch 1, **dadurch gekennzeichnet, dass** das Leistungsverzweigungsgetriebe (52) als Planetengetriebe ausgebildet ist.

3. Leistungsverzweigter Achsantrieb nach mindestens einem der vorangehenden Ansprüche, **dadurch gekennzeichnet, dass** zwischen dem ersten Zusatzantriebselement (50) und dem Leistungsverzweigungsgetriebe (52) eine zweite Bremse (66) angeordnet ist.

4. Leistungsverzweigter Achsantrieb nach mindestens einem der vorangehenden Ansprüche, **dadurch gekennzeichnet, dass** der leistungsverzweigte Achsantrieb (20) ein zweites Zusatzantriebselement (68) umfasst.

5. Leistungsverzweigter Achsantrieb nach mindestens einem der vorangehenden Ansprüche, **dadurch gekennzeichnet, dass** dem leistungsverzweigten Achsantrieb (20) zumindest eine Steuerungsvorrichtung (42) zugeordnet ist.

6. Leistungsverzweigter Achsantrieb nach Anspruch 5, **dadurch gekennzeichnet, dass** die Steuerungsvorrichtung (42) zur Ansteuerung des leistungsverzweigten Achsantriebs (20) in Abhängigkeit von einem Betriebsmodus des leistungsverzweigten Achsantriebs (20) eingerichtet ist.

7. Leistungsverzweigter Achsantrieb nach mindestens einem der vorangehenden Ansprüche 4 bis 6, **dadurch gekennzeichnet, dass** zwischen dem Hauptantriebselement (22) und dem zweiten Zusatzantriebselement (68) und/oder dem Hauptantriebselement (22) und dem Hauptgetriebe (24) ein drittes Schaltelement (78) angeordnet ist, und/oder zwischen dem Hauptgetriebe (24) und dem Hauptantriebselement (22) und/oder dem zweiten Zusatzantriebselement (68) ein viertes Schaltelement (80) angeordnet ist.

8. Landwirtschaftliches Fahrzeug umfassend einen leistungsverzweigten Achsantrieb (20) nach einem der Ansprüche 1 bis 7.

9. Landwirtschaftliches Fahrzeug nach Anspruch 8, **dadurch gekennzeichnet, dass** der leistungsverzweigte Achsantrieb (20) zum Antreiben des Fahrzeugs (10) ausgebildet ist.

10. Landwirtschaftliches Fahrzeug nach mindestens einem der Ansprüche 8 oder 9, **dadurch gekennzeichnet, dass** eine Steuerungsvorrichtung (42) zur Bestimmung von unterschiedlichen Betriebsmodi des landwirtschaftlichen Fahrzeugs eingerichtet ist.

## Claims

1. Power-split axle drive for an agricultural vehicle, comprising a first additional drive element (50), a first vehicle axle (26), a second vehicle axle (28) and a primary drive element (22) for providing a torque which by way of a first shaft (W1) is able to be transmitted to a primary transmission (24) and from the primary transmission by way of a third shaft (W3) to the second vehicle axle (28), wherein the primary transmission (24) by way of the third shaft (W3) is connected to the second vehicle axle (28), and at least the second vehicle axle (28) is able to be driven by the torque of the primary drive element (22) by way of the primary transmission (24), and the power-split axle drive (20) has a power-split transmission (52), wherein the power-split transmission (52) by way of a first gear set (54), which comprises a first and a second fixed gear, and by way of the third shaft is connected to the second vehicle axle (28) and the primary transmission (24), and by way of a second shaft is connected to the first vehicle axle (26), wherein the first fixed gear is connected to the third shaft, and the second fixed gear is connected to the power-split transmission, and the first additional drive element (50) is able to be connected to the power-split transmission (52), wherein the power-split axle drive (20) comprises a layshaft (V) and a second switching element (56) and a second gear set (58), wherein the first additional drive element (50) by way of the second switching element (56) is able to be connected to the layshaft (V), and the first additional drive element (50) by way of the second gear set (58) is connected to the second switching element (56), and the layshaft (V) is connected to the power-split transmission (52),
**characterized in that** the power-split drive (20) comprises a third gear set (60), **in that** the layshaft (V) by way of the third gear set (60) is connected to the power-split transmission (52), and **in that** a first switching element (74) and/or a first brake (76) is/are disposed on the second shaft (W2).

2. Power-split axle drive according to Claim 1, **characterized in that** the power-split transmission (52) is designed as a planetary gear set.

3. Power-split axle drive according to at least one of the preceding claims, **characterized in that** a second brake (66) is disposed between the first additional drive element (50) and the power-split transmission (52).

4. Power-split axle drive according to at least one of the preceding claims, **characterized in that** the power-split axle drive (20) comprises a second additional drive element (68).

5. Power-split axle drive according to at least one of the preceding claims, **characterized in that** the power-split axle drive (20) is assigned at least one control device (42).

6. Power-split axle drive according to Claim 5, **characterized in that** the control device (42) is specified for actuating the power-split axle drive (20) as a function of an operating mode of the power-split axle drive (20).

7. Power-split axle drive according to at least one of the preceding Claims 4 to 6, **characterized in that** a third switching element (78) is disposed between the primary drive element (22) and the second additional drive element (68) and/or the primary drive element (22) and the primary transmission (24), and/or a fourth switching element (80) is disposed between the primary transmission (24) and the primary drive element (22) and/or the second additional drive element (68).

8. Agricultural vehicle comprising a power-split axle drive (20) according to one of Claims 1 to 7.

9. Agricultural vehicle according to Claim 8, **characterized in that** the power-split axle drive (20) is designed to drive the vehicle (10).

10. Agricultural vehicle according to at least one of Claims 8 or 9, **characterized in that** a control device (42) is specified for determining different operating modes of the agricultural vehicle.

## Revendications

1. Entraînement d'essieu à répartition de puissance pour un véhicule agricole,
comprenant un premier élément d'entraînement supplémentaire (50), un premier essieu de véhicule (26), un deuxième essieu de véhicule (28) et un élément d'entraînement principal (22) pour fournir un couple qui peut être transmis avec un premier arbre (W1) à une transmission principale (24) et de la transmission principale au deuxième essieu de véhicule (28) avec un troisième arbre (W3), la transmission principale (24) étant reliée au deuxième essieu de véhicule (28) par l'intermédiaire du troisième arbre (W3), et au moins le deuxième essieu de véhicule (28) pouvant être entraîné par le couple de l'élément d'entraînement principal (22) par l'intermédiaire de la transmission principale (24), et l'entraînement d'essieu à répartition de puissance (20) présentant une transmission à répartition de puissance (52), la transmission à répartition de puissance (52) étant reliée au deuxième essieu de véhicule (28) et à la transmission principale (24) par l'intermédiaire d'un premier jeu de roues (54) comprenant une première et une deuxième roue fixe, et par l'intermédiaire du troisième arbre, et étant relié au premier essieu de véhicule (26) par l'intermédiaire d'un deuxième arbre, la première roue fixe étant reliée au troisième arbre et la deuxième roue fixe étant reliée à la transmission à répartition de puissance, et le premier élément d'entraînement supplémentaire (50) pouvant être relié à la transmission à répartition de puissance (52), l'entraînement d'essieu à répartition de puissance (20) comprenant un arbre de renvoi (V) et un deuxième élément de commutation (56) et un deuxième jeu de roues (58), le premier élément d'entraînement supplémentaire (50) pouvant être relié au deuxième élément de commutation (56) par l'arbre de renvoi (V), et le premier élément d'entraînement supplémentaire (50) étant relié au deuxième élément de commutation (56) par l'intermédiaire du deuxième jeu de roues (58), et l'arbre de renvoi (V) étant relié à la transmission à répartition de puissance (52),
**caractérisé en ce que** l'entraînement à répartition de puissance (20) comprend un troisième jeu de roues (60), **en ce que** l'arbre de renvoi (V) est relié à la transmission à répartition de puissance (52) par l'intermédiaire du troisième jeu de roues (60), et **en ce qu'**un premier élément de commutation (74) et/ou un premier frein (76) est agencé sur le deuxième arbre (W2).

2. Entraînement d'essieu à répartition de puissance selon la revendication 1, **caractérisé en ce que** la transmission à répartition de puissance (52) est configurée sous forme d'engrenage planétaire.

3. Entraînement d'essieu à répartition de puissance selon au moins l'une quelconque des revendications précédentes, **caractérisé en ce qu'**un deuxième frein (66) est agencé entre le premier élément d'entraînement supplémentaire (50) et la transmission à répartition de puissance (52).

4. Entraînement d'essieu à répartition de puissance selon au moins l'une quelconque des revendications précédentes, **caractérisé en ce que** l'entraînement d'essieu à répartition de puissance (20) comprend un deuxième élément d'entraînement supplémentaire (68).

5. Entraînement d'essieu à répartition de puissance selon au moins l'une quelconque des revendications précédentes, **caractérisé en ce qu'**au moins un dispositif de commande (42) est associé à l'entraînement d'essieu à répartition de puissance (20).

6. Entraînement d'essieu à répartition de puissance selon la revendication 5, **caractérisé en ce que** le dispositif de commande (42) est adapté pour commander l'entraînement d'essieu à répartition de puissance (20) en fonction d'un mode de fonctionnement de l'entraînement d'essieu à répartition de puissance (20).

7. Entraînement d'essieu à répartition de puissance selon au moins l'une quelconque des revendications 4 à 6 précédentes, **caractérisé en ce qu'**un troisième élément de commutation (78) est agencé entre l'élément d'entraînement principal (22) et le deuxième élément d'entraînement supplémentaire (68) et/ou l'élément d'entraînement principal (22) et la transmission principale (24), et/ou un quatrième élément de commutation (80) est agencé entre la transmission principale (24) et l'élément d'entraînement principal (22) et/ou le deuxième élément d'entraînement supplémentaire (68).

8. Véhicule agricole comprenant un entraînement d'essieu à répartition de puissance (20) selon l'une quelconque des revendications 1 à 7.

9. Véhicule agricole selon la revendication 8, **caractérisé en ce que** l'entraînement d'essieu à répartition de puissance (20) est configuré pour entraîner le véhicule (10).

10. Véhicule agricole selon au moins l'une quelconque des revendications 8 ou 9, **caractérisé en ce qu'**un dispositif de commande (42) est adapté pour déterminer différents modes de fonctionnement du véhicule agricole.
